# EUROPEAN PATENT SPECIFICATION

(11) **EP 4 486 710 B1**
(45) Date of publication and mention of the grant of the patent: **22.07.2026**
(21) Application number: 23706368.0
(22) Date of filing: 23.02.2023
(51) Int. Cl.: C04B 2/04, C04B 2/10

(54) **PROCESS FOR DECARBONATION OF CARBONATED MATERIALS AND HYDRATION THEREOF AND DEVICE THEREFOF**
VERFAHREN ZUR DEKARBONISIERUNG VON KOHLENSÄUREHALTIGEN MATERIALIEN UND DEREN HYDRATISIERUNG UND VORRICHTUNG DAFÜR
PROCÉDÉ DE DÉCARBONATATION DE MATÉRIAUX CARBONÉS ET D'HYDRATATION DE CELUI-CI ET DISPOSITIF ASSOCIÉ

(30) Priority: 02.03.2022 EP 22159666
(43) Date of publication of application: 08.01.2025
(73) Proprietor: Carmeuse Technologies SA, 1348 Louvain-la-Neuve (BE)
(72) Inventor: ROBIN, Charles, 5340 Faulx-Les-Tombes (BE); GUTHRIE, Steven Bruce, 5020 Malonne (BE); CAMBIER, Pierre-Olivier, 1320 Hamme-Mille (BE); BRANDT, Johan, 4550 Nandrin (BE)
(74) Representative: AWA Benelux
(86) International application number: PCT/EP2023/054600
(87) International publication number: WO 2023/165896

(56) References cited:
- EP-A1- 2 230 223
- EP-A1- 2 722 094

## Description

### Field of the Invention

The invention relates to a process for decarbonation of limestone, dolomite or other carbonate(d) materials and hydration of said decarbonated limestone, dolomite or other carbonate(d) materials and a device thereof.

### Background and Prior Art

Traditionally, the decarbonation of limestone or dolomite is performed through calcination in a kiln.

The traditional kilns reject significant amounts of CO₂ via the decarbonation of the carbonated materials and the combustion of fuels. In the search for cleaner industrial plants and cost saving in emerging markets that penalize carbon emissions, efforts have been made to reduce the CO₂ footprint of kilns by introducing heat-regeneration measures. For instance, the air that is heated from product cooling is blown into the burning zone of the kiln and used for the combustion of the fuel. These improvements are required to achieve an efficiency with a specific heat input of <5.2GJ/Tonne product. However, the CO₂ generated in the known kilns is still emitted to the atmosphere as it cannot be used or sequestered because it is too diluted in the flue gas.

To overcome these drawbacks, the skilled person has come along with the concept of a calciner as that disclosed in US 4,707,350, where limestone particles are entrained/conveyed by CO₂ gas in a close-loop circuit. The carbonated particles are first preheated before they are fed into a reactor where the decarbonation takes place under high temperatures. This known process overcomes most of the known drawbacks. The decarbonation takes place in an atmosphere that is substantially free of nitrogen. The generated CO₂ can be used or sequestered. However, the extended residence time of decarbonated particles in a CO₂-rich atmosphere in a cooling zone positioned downstream from the decarbonation reactor causes recarbonation of the product (i.e. lime).

Patent EP 2230223 B1 discloses a kiln comprising chambers, where a first chamber is dedicated to the decarbonation with an atmosphere that is free of nitrogen and a second chamber dedicated to the cooling of the decarbonated particles in an atmosphere that is free of CO₂ in order to limit the exposure of the product (i.e. lime) to CO₂. This process further teaches a solution to recover energy. This kiln (a.k.a. shaft kiln) presents a static technology, where pebbles are stacked in the chambers.

The kiln of EP 2230223 B1 is conceived to be operated with pebbles, for which it is difficult in practice to have a proper sealing device without introducing a complex locking mechanism between both chambers. Moreover, this kiln does not offer the possibility to optimise the operation of limestone quarries. Indeed, the fines that are generated during the crushing operations required to produce the pebbles are generally hardly used in such a kiln. Finally, the maximal throughput is typically around 500 to 600 t/day and this level is comparatively low to reach scale economies.

Patent application EP 3221264 A1 teaches a process for producing a highly calcined and uniformly calcined product in a flash calciner, where the decarbonation fine carbonated materials takes place in a few seconds. However, this publication fails to disclose any measure on how to operate two separated circuits, namely a calcination and a cooling circuit, in which circulate two different gases (one rich in CO₂ and the second free of CO₂) for conveying the particles of carbonate/decarbonated materials and fails to achieve the desired products of cooled pure CO₂ and decarbonated material from the carbonated material.

EP2722094 shows a process for the decarbonation of limestone, dolomite or other carbonated materials and hydration of said decarbonated materials. The CO2 is then absorbed by the CaO containing sorbent rendering the second gas in some sections of the second circuit depleted in CO2.

Furthermore, the decarbonated of limestone or dolomite can be hydrated to form hydroxides (comprising Ca(OH)₂ and/or Mg(OH)₂). This process generate substantial amount of heat that is generally not recovered.

### Aims of the Invention

The invention aims to provide a solution to at least one drawback of the teaching provided by the prior art.

More specifically, the invention aims to provide a process and a device for allowing a decarbonation and hydration with a high production throughput of a product (e.g. hydrated lime) while producing a CO₂ rich stream suitable for sequestration or use and recovering, at least partly, the heat generated by the hydration reaction..

### Summary of the invention

For the above purpose, the invention is directed to a process for decarbonation of limestone, dolomite or other carbonated materials and hydration of said decarbonated limestone, dolomite or other carbonated materials, said process comprising the following steps:
- heating particles of carbonated materials in a reactor of a first circuit up to a temperature range in which carbon dioxide of the carbonated materials is released to obtain decarbonated particles comprising CaO and/or MgO;
- optionally conveying said particles of carbonated materials by a first entraining gas in the first circuit for preheating said carbonated materials, said gas comprising the released carbon dioxide, said gas composition being substantially free of nitrogen;
- optionally separating, in particular inertially separating, the carbonated particles from a first entraining gas flow ;
- transferring the decarbonated particles to a second circuit, in which a second gas circulates, said circuit comprising a hydration section;
- hydrating the decarbonated particles in contact with water as liquid and/or steam, and optionally in the presence of a dilution gas, such as air or a dioxygen enriched composition, in particular pure dioxygen, in the hydration section to obtain hydrated particles comprising Ca(OH)₂ and/or Mg(OH)₂;
- transferring at least a portion of the heat generated by the hydration of the decarbonated particles to the second gas;
- at least one of:
   i. discharging the second gas to the atmosphere at an outlet of the second circuit,
   ii. supplying the reactor with the second gas, and/or
   iii. supplying with the second gas at least one heat recovery element in which the heat of the second gas is used preferably for:
      - preheating and drying at least carbonated materials, in particular the carbonated particles and/or fuel,
      - drying hydrated products, in particular hydrated particles,
      - providing a heat source for a gas treatment process, in particular an amine gas treating apparatus, a thermal swing adsorption apparatus, a cryogenic refrigeration apparatus, a CO2 conversion reaction,
      - generating mechanical work, and/or
      - generating electricity.

According to specific embodiments of the invention, the process comprises one or more of the following technical features:
- a portion of the heat generated by at least the hydration of the decarbonated particles, the sensible heat of the decarbonated particles and/or the sensible heat of the hydrated particles are transferred to a third gas substantially free of carbon dioxide circulating in a third circuit, in particular via a heat exchanger and/or via contacting the hydrated particles and/or decarbonated particles with the third gas.
- Cooling the decarbonated particles before the hydration step in a cooling section of the second circuit or the third circuit, in which the decarbonated particles release a portion of their thermal energy, thereby heating the second gas or the third gas and ensuring a cooling of said decarbonated particles;
- the cooling section of the second circuit is positioned downstream from the hydration section, further comprising before the hydration step:
- the (step of) transferring the decarbonated particles to a second circuit comprises transferring the decarbonated particles to the cooling section of the second circuit preferably via a first selective separation means arranged between the first and second circuit, said separation means allowing the passage of solids while substantially preventing the passage of the gases;
- separating, in particular inertially separating, the decarbonated particles conveyed by a second gas flow in the cooling section of the second circuit;
- transferring the decarbonated separated particles from said cooling section to the hydration section.
- transferring the decarbonated particles to the cooling section of the third circuit preferably via a first selective separation means arranged between the first and third circuit, said separation means allowing the passage of solids while substantially preventing the passage of the gases;
- separating, in particular inertially separating, the decarbonated particles conveyed by a third gas flow in the cooling section of the third circuit;
- transferring the decarbonated particles separated from said cooling section to the hydration section, preferably via a first selective separation means arranged between the second and third circuits, said separation means allowing the passage of solids while substantially preventing the passage of the gases;
- the transferring the decarbonated separated particles from said cooling section of the second or third circuit to the hydration section further comprises the steps of:
   - transferring the decarbonated particles from the cooling section of the second or third circuit to an additional cooling section in the second or third circuit in which the decarbonated particles release a portion of their thermal energy, respectively;
   - separating the decarbonated particles cooled in the previous step from the second or third gas flow, wherein the additional cooling section is arranged upstream from the cooling section of the second or third circuit, respectively;
   - transferring the decarbonated separated particles from said additional cooling section to the hydration section, in particular via the first selective separation means arranged between the second and third circuits, said separation means allowing the passage of solids while substantially preventing the passage of the gases;
- the transferring the decarbonated separated particles from the cooling section or the additional cooling section of the second circuit to the hydration section comprises the steps of:
   - transferring the decarbonated particles from the cooling section or the additional cooling section of the second circuit to the cooling section of the third circuit comprising the third gas in which the conveyed decarbonated particles release a portion of their thermal energy, in particular via a first selective separation means arranged between the second and third circuits, said separation means allowing the passage of solids while substantially preventing the passage of the gases;
   - separating the decarbonated particles from a third gas flow;
   - transferring the decarbonated particles separated from the third gas flow to the hydration section, in particular via a second selective separation means arranged between the second and third circuits, said separation means allowing the passage of solids while substantially preventing the passage of the gases.
- the transferring the decarbonated separated particles from the cooling section or the additional cooling section of the third circuit to the hydration section comprises the steps of:
   - transferring the decarbonated particles separated from the cooling section or the additional cooling section of the third circuit to the cooling section of the second circuit comprising the second gas in which the conveyed decarbonated particles release a portion of their thermal energy, in particular via the first selective separation means arranged between the second and third circuits, said separation means allowing the passage of solids while substantially preventing the passage of the gases;
   - separating the decarbonated particles from a second gas flow;
   - transferring the decarbonated particles separated from the second gas flow to the hydration section.
- transferring the hydrated particles to a further cooling section of the third circuit in which the hydrated particles release a portion of their thermal energy, preferably via a third selective separation means arranged between the second and third circuits, said separation means allowing the passage of solids while substantially preventing the passage of the gases;
- separating the hydrated particles cooled in the previous step from the third gas flow, wherein the further cooling section is arranged upstream from the cooling section of the third circuit.
- transferring the hydrated particles to a further cooling section in the second circuit in which the hydrated particles release a portion of their thermal energy;
- separating the hydrated particles cooled in the previous step from the second flow, wherein the further cooling section is arranged upstream from the cooling section of the second circuit.
- Feeding the hydration section with
   - the decarbonated particles,
   - liquid water and/or water steam, and
   - optionally the diluting gas;
- Extracting a gas comprising hot air, water steam, fuel, or a dioxygen enriched composition, or any mixture thereof from said hydration section, said gas comprising at least a portion of the heat generated by the hydration of the decarbonated particles;
- Feeding the second circuit with said gas.
- transferring at least a portion of the heat generated by the hydration of the decarbonated particles to the second gas comprises transferring at least a portion of the heat generated by the hydration of the decarbonated particles to the second gas via at least one heat exchanger.
- the hydration section comprises a fluidized bed reactor such as a circulating fluidized bed, an entrained bed or a bubbling bed or a slaker such as a paddle mixer.
- transferring the hydrated particles from the hydration section to a slaked lime dryer;
- drying the hydrated particles in the slaked lime dryer using a portion of the thermal energy of the second fluid flow.
- introducing the particles of carbonated materials in a heating section of the second circuit, in which the heating section is positioned downstream of the hydration section, so that the heat extracted from the hydration section, the decarbonated particles, and optionally the hydrated particles, in particular to the second gas, is used to heat the particles of carbonated materials by means of a solid-gas heat exchange, the heated carbonated particles being subsequently separated from the second gas flow and transferred to the reactor or upstream of a pre-heating section of the first circuit, preferably via a second selective separation means arranged between the first circuit and the second circuit, allowing the passage of solids while substantially preventing the passage of the gases.
- introducing the particles of carbonated materials in a heating section of the third circuit, in which the heating section is positioned downstream of the cooling section, so that heat extracted from the decarbonated particles and optionally the hydrated particles and/or heat extracted from the hydration section, in particular to the third gas, is used to heat the particles of carbonated materials by means of a solid-gas heat exchange, the heated carbonated particles being subsequently separated from the third gas flow and transferred to the reactor or upstream of the pre-heating section of the first circuit, preferably via a selective separation means arranged between the first circuit and the third circuit, allowing the passage of solids while substantially preventing the passage of the gases.
- maintaining pressure in at least the hydration section, the cooling section and/or the further cooling section of the second circuit above the atmospheric pressure between 1 and 20 bars above atmospheric pressure, and/or the temperature in at least the hydration section, the cooling section and/or the further cooling section of the second circuit below the temperature at which de-hydration occurs such as T[°K] < 11607 / (14,6484 - In(PH20[bar])).
- feeding the second circuit with air and/or an dioxygen enriched composition, in particular pure dioxygen, and optionally fuel.
- feeding the third circuit with air and/or an dioxygen enriched composition, in particular pure dioxygen, and optionally fuel.
- discharging the third gas to the atmosphere at an outlet of the second circuit
- supplying the reactor with the third gas
- supplying with the third gas at least one heat recovery element in which the heat of the third gas is used for:
   ∘ preheating and drying at least carbonated materials, in particular carbonated particles and/or fuel;
   ∘ drying hydrated products, in particular hydrated particles ;
   ∘ providing heat source for a gas treatment process, in particular an amine gas treating apparatus, a thermal swing adsorption apparatus, a cryogenic refrigeration apparatus, a CO2 conversion reaction;
   ∘ generating mechanical work; and/or
   ∘ generating electricity;
- introducing the particles of carbonated materials in the pre-heating section of the first circuit so that said particles are pre-heated by the first entraining gas by means of a solid-gas heat exchange.
- recirculating at least a portion of the carbon dioxide released in the reactor in the first circuit, preferably recirculating said carbon dioxide to the reactor.
- recycling at least a portion of the heat of the second gas, preferably exchanging heat from the second to the first entraining gas, more preferably through a gas-gas heat exchanger positioned between the first circuit and the second circuit.
- recycling at least a portion of the heat of the third gas, preferably exchanging heat from the third gas to the first entraining gas, more preferably through a gas-gas heat exchanger positioned between the first circuit and third circuit.
- at least one of the separation means allowing the passage of solids while substantially preventing the passage of the gases comprises a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve.
- the particles of the carbonated minerals have a d90 less than 10 mm, preferably less than 6 mm, more preferably less than 4 mm;
- the carbon dioxide represents at least 50%, preferably at least 85% by volume of the first entraining dry gas composition exiting the reactor;
- comprising the step of controlling a louver or a damper and/or a fan speed in at least the first circuit , second circuit and/or third circuit so that the absolute pressure difference across at least one of the selective separation means remains below a predefined value, preferably remains within a given pressure range.

For the above purpose, the invention is also directed to a process for decarbonation of limestone, dolomite or other carbonated materials comprising steps of
- producing hydrated particles using the process for decarbonation of limestone, dolomite or other carbonated materials and hydration of said decarbonated limestone, dolomite or other carbonated materials according to the invention;
- transferring the hydrated particles to a dehydrating section ;
- dehydrating the hydrated particles in the dehydrating section in which the hydrated particles are exposed to a temperature range and pressure range in which the H₂O is released forming further decarbonated particles comprising CaO and/or MgO.

According to specific embodiments of the invention, the process comprises one or more of the following technical features:
- the dehydrating section is provided in the third circuit downstream from the cooling section thereof,
- transferring the hydrated particles from the hydration section to the dehydrating section, optionally via a fourth selective separation means arranged between the second and third circuits allowing the passage of solids, while substantially preventing the passage of the gases, said process further comprising the step of discharging the further decarbonated particles formed in the dehydrating section.
- transferring the further decarbonated particles discharged to a complementary cooling section in the third circuit in which the further decarbonated particles release a portion of their thermal energy;
- separating the further decarbonated particles cooled in the previous step from the third gas flow, wherein the complementary cooling section is arranged upstream from the cooling section of the third circuit.

For the above purpose, the invention is also directed to a process for capturing CO2 from air or flue gas comprising the following steps:
a. producing hydrated materials using a process for decarbonation of limestone, dolomite or other carbonated materials and hydration of said decarbonated limestone, dolomite or other carbonated materials according to the invention;
b. contacting the produced lime hydrate materials with CO2-containing gas stream such as air or flue gas so as to remove CO2 from said gas stream, respectively;
c. recycling the carbonated materials formed in step b) as carbonated materials for step a).

For the above purpose, the invention is also directed to a process for capturing CO2 from air or flue gas comprising the following steps:
a. producing decarbonated materials using the process for decarbonation of limestone, dolomite or other carbonated materials according to the invention;
b. contacting the produced decarbonated materials with air or flue gas so as to remove CO2 from air or flue gas, respectively;
c. recycling the carbonated materials formed in step b) as carbonated materials for step a).

The invention also relates to a device for the decarbonation of limestone, dolomite or other carbonated materials and hydration of said decarbonated limestone, dolomite or other carbonated materials, for carrying out the process according to the invention comprising:
- a first circuit in which a first gas substantially free of nitrogen conveys particles of said carbonated mineral, said first circuit comprising a reactor in which said particles are heated to a temperature range in which carbon dioxide is released to obtain decarbonated particles comprising CaO and/or MgO;
- a second circuit in which a second gas substantially free of carbon dioxide is circulated, the second circuit comprising a hydration section in which the decarbonated particles transferred from the first circuit are in contact with water as liquid and/or steam at least liquid water and/or water steam and optionally a diluting gas, wherein the second circuit comprises at least one of: a free outlet end for discharging the second gas to the atmosphere, an outlet end connected to the reactor to supply the reactor with the second gas and/or an outlet end connected to at least one heat recovery element recovering the heat of the second gas, preferably said element being selected in the group comprising: fuel dryer, hydrate dryer, a steam generator for generating (mechanical work and/or electricity) in a turbine and a CO2 treatment process such as an amine gas treating apparatus, a thermal swing adsorption apparatus or a cryogenic refrigeration apparatus.

According to specific embodiments of the invention, the device comprises one or more of the following features:
- the second circuit comprises a cooling section positioned downstream from the hydration section of the second circuit and optionally a further cooling section upstream from the hydration section, preferably the cooling section and optionally the further cooling section comprising a solid/gas suspension heat exchanger, respectively.
- a first selective separation means connecting the first and the second circuit allowing the transfer of the decarbonated particles from the first circuit to the second circuit while substantially preventing the passage of gases, in particular a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve, the first selective separation means being connected upstream of an inlet of the suspension heat exchanger of the cooling section of the second circuit.
- the hydrating section comprises a fluidized bed reactor such as a circulating fluidized bed, an entrained bed or a bubbling bed or a slaker such as a paddle mixer.
- a third circuit in which the third gas substantially free of carbon dioxide is circulated, said circuit comprising the cooling section in which the decarbonated particles transferred from the first circuit release a portion of their thermal energy to the third gas, preferably said cooling section comprising a solid/gas suspension heat exchanger.
- a first selective separation means connecting the second and the third circuit allowing the transfer of the decarbonated particles between the second circuit and the third circuit while substantially preventing the passage of gases, preferably the first selective separation means being connected to a return passage for collecting the separated decarbonated particles of the suspension heat exchanger of the cooling section of the second circuit and upstream of an inlet of the suspension heat exchanger of the cooling section of the third circuit.
- first selective separation means connecting the first and the third circuit allowing the transfer of the decarbonated particles between the first circuit and the third circuit while substantially preventing the passage of gases, preferably the first selective separation means being connected upstream of an inlet of the suspension heat exchanger of the cooling section of the third circuit.
- the third circuit comprises a further cooling section positioned upstream from the cooling section of the third circuit , preferably said further cooling section comprising a solid/gas suspension heat exchanger;
- a second selective separation means connecting the third and the second circuit allowing the transfer of the decarbonated particles from the third circuit to the second circuit while substantially preventing the passage of gases , preferably the second selective separation means being connected to a return passage for collecting the separated decarbonated particles of the suspension heat exchanger of the cooling section of the third circuit and to an inlet of the hydration section;
- a third selective separation means connecting the second and the third circuit allowing the transfer of the hydrated particles from the second circuit to the third circuit while substantially preventing the passage of gases , preferably the third selective separation means being connected to an outlet of the hydration section and upstream of an inlet of the suspension heat exchanger of the further cooling section of the third circuit;
- the first circuit comprises a pre-heating section, said pre-heating section comprising a solid/gas suspension heat exchanger;
- the second circuit comprises a heating section positioned downstream from the cooling section of the second circuit , preferably said heating section comprising a solid/gas suspension heat exchanger;
- a second selective separation means connecting the first and the second circuit allowing the transfer of the carbonated particles from the second circuit to the first circuit while substantially preventing the passage of gases , preferably the second selective separation means being connected to a return passage for collecting the separated carbonated particles of the solid/gas suspension heat exchanger of the heating section of the second circuit and to the reactor or upstream of the solid/gas suspension heat exchanger of the pre-heating section of the first circuit;
- the third circuit comprises a heating section positioned downstream from the cooling section of the third circuit , preferably said heating section comprising a solid/gas suspension heat exchanger;
- a second selective separation means connecting the first and the third circuit allowing the transfer of the carbonated particles from the third circuit to the first circuit while substantially preventing the passage of gases , preferably said selective separation means being connected to a return passage for collecting the separated carbonated particles of the solid/gas suspension heat exchanger of the third circuit and to the reactor or upstream of the solid/gas suspension heat exchanger of the pre-heating section of the first circuit;
- the reactor comprises an externally-fired calciner, said externally-fired calciner comprising an exhaust passage , said passage being connected to the second circuit , preferably upstream of the heating section;
- the solid/gas suspension heat exchanger of the first circuit comprises at least one inertial separator, in particular a cyclone;
- the solid/gas suspension heat exchangers of the second and third circuit and/or the solid/gas suspension exchanger of the heating section of the second and third circuit each comprise at least one inertial separator, preferably a cyclone;
- a condenser to separate at least one constituent, in particular water from the first gas , said condenser being positioned in the first circuit downstream of the reactor;
- the first circuit comprises a recycling passage for recycling at least a portion of the first gas from a position downstream from the pre-heating section or the condenser to a position upstream of the reactor;
- the second circuit and/or third circuit comprise a heat-recovery element, preferably said heat-recovery element being configured to exchange the heat accumulated in the second and/or third gas to the first gas at a section of the first circuit , more preferably said heat-recovery system being a heat exchanger positioned between the first circuit and the second or third circuit;
- the reactor comprises at least one of the following elements: electric heater, oxy-burner, an indirect calciner such as solid heat-carrier reactor, an externally-fired calciner , or electrically-heated calciner, or a combination thereof;
- the reactor comprises a fluidized bed reactor, an entraining bed reactor, a circulated fluidized bed or any combination thereof;
- the externally-fired calciner comprises an intake passage , said passage being connected to the second circuit , preferably downstream from the heating section;
- the third circuit comprise a further heat-recovery element, in particular in the list comprising: a carbonated material preheater, an hydrated lime dryer, an alternative fuel drier, a steam boiler, a heat recovery steam generator, a gas turbine, an amine-based CO₂ capture apparatus, a thermal swing adsorption apparatus or a cryogenic refrigeration apparatus;
- a fourth selective separation means connecting the second and the third circuit allowing the transfer of the hydrated particles from the second circuit to the third circuit while substantially preventing the passage of gases preferably the fourth selective separation means being connected to an outlet passage of the hydration section and an inlet of the dehydrating section.

The invention also relates to a device for a device for the decarbonation of limestone, dolomite or other carbonated materials, for carrying out the process according to the invention, comprising a device for the decarbonation of limestone, dolomite or other carbonated materials and hydration of said decarbonated limestone, dolomite or other carbonated materials, according to the invention, and a dehydrating section.

According to specific embodiments of the invention, the device comprises one or more of the following features:
- the dehydrating section is positioned in the second circuit downstream from the cooling section of the second circuit, preferably said dehydrating section comprising a solid/gas suspension heat exchanger.
- the dehydrating section is positioned in the third circuit downstream from the cooling section of the third circuit, preferably said dehydrating section comprising a solid/gas suspension heat exchanger;
- a fourth selective separation means connecting the second and the third circuit allowing the transfer of the hydrated particles from the second circuit to the third circuit while substantially preventing the passage of gases , preferably the fourth selective separation means being connected to an outlet passage of the hydration section and an inlet of the dehydrating section.

### Brief description of the figures

Preferred aspects of the invention will now be described in more detail with reference to the appended drawings, wherein same reference numerals illustrate same features.

### List of reference symbols

- 2: First circuit, calcination circuit
- 4: First (entraining) gas
- 6: Carbonated particles
- 7: Water- (as liquid and/or steam)
- 8: Reactor/first reactor
- 12: Second circuit
- 12': Third circuit
- 14: Second gas
- 14': Third gas
- 16: Decarbonated particles
- 16': Further decarbonated particles
- 17: Hydrated particles
- 20, 20', 20",20"', 20ʺʺ, 21, 21': Selective separation means, sealing device
- 22: Cooling section of the **second circuit**
- 22': Further cooling section of the **second circuit**
- 22": Cooling section of the third **circuit**
- 22‴: Further cooling section of the third **circuit**
- 22ʺʺ: Complementary cooling section of the third **circuit**
- 22*: Additional cooling section of the **second circuit**
- 22**: Additional cooling section of the **third circuit**
- 23: Hydration section
- 24: *(First)* solid/gas suspension heat exchanger of the **second circuit**
- 24.1: inlet of the *(first)* solid/gas suspension heat exchanger of the **second circuit**
- 24.2: outlet of the *(first)* solid/gas suspension heat exchanger of the **second circuit**
- 24.3: return of the *(first)* solid/gas suspension heat exchanger of the **second circuit**
- 23: Hydration section
- 25: Fluidized bed reactor
- 25': Paddle mixer slaker
- 27: Fluidized bed hydration reactor
- 29, 29': dehydrating section
- 32: Pre-heating section of the **second circuit**
- 34: *(Second)* solid/gas suspension heat exchanger of the **second circuit**
- 34.1: inlet of the *(second)* solid/gas suspension heat exchanger of the **second circuit**
- 34.2: outlet of the *(second)* solid/gas suspension heat exchanger of the **second circuit**
- 34.3: return of the *(second)* solid/gas suspension heat exchanger of the **second circuit**
- 42: Pre-heating section of the **first circuit**
- 44: *(First)* solid/gas suspension heat exchanger of the **first circuit**
- 44.1: inlet of the *(first)* solid/gas suspension heat exchanger of the **first circuit**
- 44.2: outlet of the *(first)* solid/gas suspension heat exchanger of the **first circuit**
- 44.3: return of the *(first)* solid/gas suspension heat exchanger of the **first circuit**
- 50: Condenser
- 60: gas-gas heat exchanger
- 82: Oxy-burner
- 84: Externally-fired calciner
- 86: Second reactor
- 90: Recycling passage
- 100: Exhaust passage
- 110: intake passage

### Description of Preferred Embodiments of the Invention

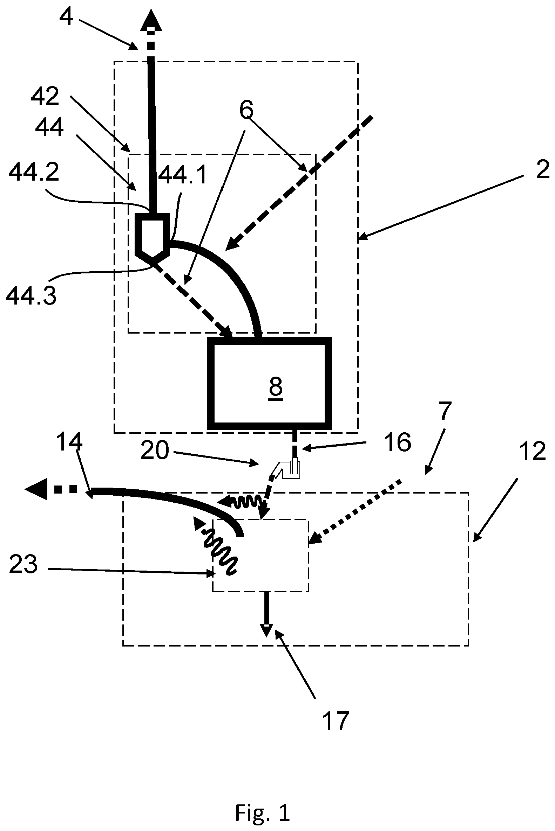

Fig. 1 shows a device for the decarbonation of limestone, dolomite or other carbonated materials and hydration of said decarbonated limestone, dolomite or other carbonated materials comprising the key features of the present invention. All other embodiments disclosed below are derived from the core concept disclosed in Fig. 1. In Fig. 1, the carbonated materials 6, such as limestone or dolomite in form of ground and screened particles, are fed into a first circuit 2, in which a first gas 4 circulates, said gas 4 being the exhaust gas of a reactor 8. The particles of carbonated materials 6 are entrained/conveyed to the reactor 8 where the decarbonation takes place under high temperatures. The first gas 4 is selected substantially free of nitrogen. For instance, the nitrogen represents less than 10% vol. in particular less than 5% vol. of the first gas 4 composition. This facilitates the final purification of the exhaust gas 4 into a suitable purity for downstream CO₂ use or sequestration. Furthermore, when the decarbonation is performed in an atmosphere substantially free of nitrogen, a negligible amount of NOx is generated. Indeed, NOx is likely to be formed under heat and in the presence of oxygen and nitrogen, which are the two main constituents of air. The first circuit 2 is therefore sealed from the ambient air. The first gas 4 is used to preheat the particles of carbonated materials 6. The first gas 4 mainly results from the CO₂ being released during the decarbonation process in the reactor 8 and optionally from the gas resulting from the combustion coupled to the decarbonation process. It should be noted that the first gas 4 transports the particles of carbonated materials 6 away from the reactor 8, which is a gas source for the first gas 4 stream. In order to feed the reactor 8 with the particles of carbonated materials 6, a solid/gas separation, preferably an inertial separation is performed in separator 44 such as a cyclone or a group of cyclones. Separator 44 helps not only to separate the solid materials from the gas, but also enhances heat exchanges. Indeed, the solid particles are efficiently heated by the gas before being separated thanks to a proper distribution of the solid particles in the gas stream, a vast surface area of the solid gets in contact with the gas. Consequently, the solid and gas materials reach similar temperature in a very short time (typically a fraction of seconds). This type of heat exchanger is called solid-gas heat exchanger or suspension heat exchanger 44, and can typically contain several gas-solid separators to approach a counter current contact between the first gas 4 and the carbonated particles 6. Once the carbonated particles 6 are decarbonated in the reactor 8, the decarbonated particles 16 are transferred to a second circuit 12, via a selective separation means 20 connecting the first and second circuits, 2 and 12. The selective separation means 20 (sealing device) is arranged so as to allow the transfer of the particles of decarbonated materials 16 from the first circuit 2 to the second circuit 12 while substantially preventing the passage of gases 4 to circuit 12 and gases 14 to circuit 2. This selective separation means 20 can be a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve. The second circuit 12 comprises a hydration section 23 in which the decarbonated particles 16 in contact with at least liquid water and/or water steam 7, and optionally in the presence of a dilution gas (not shown), such as air or a dioxygen enriched composition, in particular pure dioxygen, are hydrated to obtain hydrated particles 17 comprising Ca(OH)₂ and/or Mg(OH)₂. The second gas 14 circulating in the second section 12 is at least heated by a portion of the heat generated by the hydration of the decarbonated particles 16. This heat can be recovered for subsequent usage. The heat from second gas 14 can optionally be transferred to another fluid using an indirect heat exchange element, thereby producing a dust-free heat stream for subsequent usage (not shown).

As show in Fig. 1 the conveyed decarbonated particles 16 release a portion of their thermal energy, thereby heating the second gas 14. This measure allows to cool down the decarbonated particles 16 exiting the first circuit 2 at a temperature of typically above 900°C in order to control temperature in the hydration section 23 below a certain threshold under which thermodynamic equilibrium allows hydration to take place (e.g. below 520 °C when partial pressure of steam remains below 1 bar) .

The process and the device of the present invention ensure that any gas mixture being in direct contact with the CaO/MgO or Ca(OH)₂/Mg(OH)₂ is substantially free of CO₂ in order to avoid any reconversion back to CaCO₃/MgCO₃. Second gas 14 is therefore substantially free of CO2 (e.g. less than 5% vol.). Hence, the present invention allows to bring the residual amount of carbonated in the product to an acceptable level (e.g. less than 5% in weight).

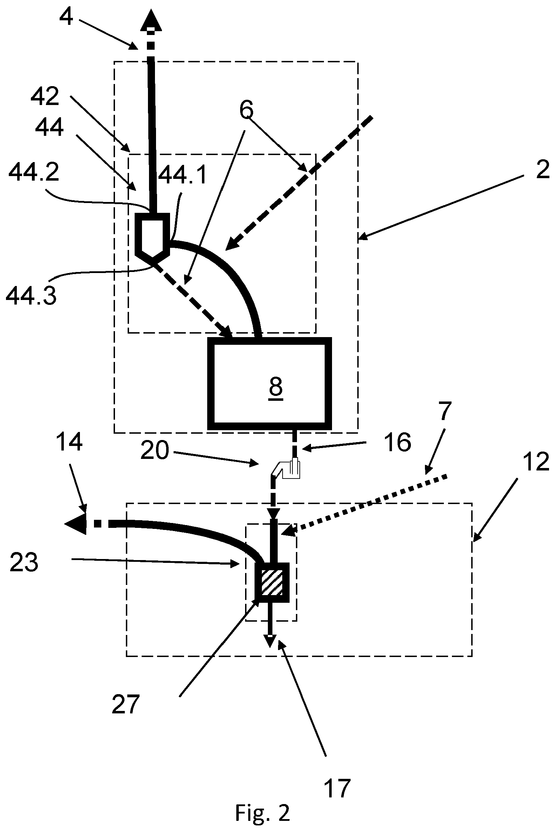

Fig. 2 shows an embodiment in which hydration section 23 comprises a fluidized bed reactor (27) fed with decarbonated particles 16, liquid water and/or water steam, and optionally a diluting gas. The second gas 14 is extracted from the hydration section (e.g. water steam, air, oxygen or a mixture thereof). The second gas 14 circulating in the second circuit 12 comprises at least a portion (i.e. the entirety or a portion) of the heat generated by the hydration of the decarbonated particles 16 and the heat transferred by the cooling of the decarbonated particles (not shown).

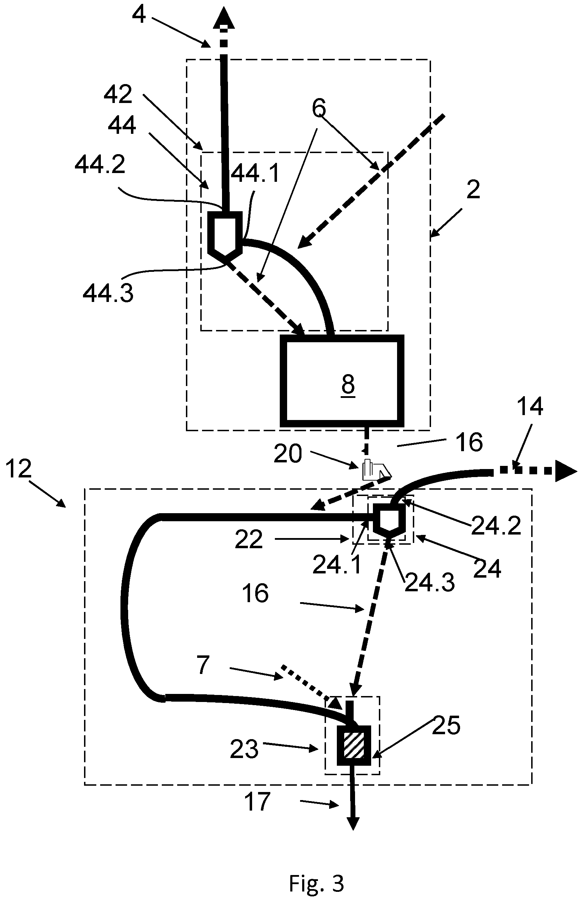

Fig. 3 shows the embodiment of Fig. 2 further comprising a cooling section 22 positioned in the second circuit 12 downstream from the hydration section 23, in which the conveyed decarbonated particles 16 release a portion of their thermal energy, thereby heating the second gas 14. The decarbonated particles 16 are then separated from a second gas 14 flow and subsequently transferred to the hydration section 23. This measure allows to cool down the decarbonated particles 16 exiting the first circuit 2 at a temperature of typically above 900°C in order to control temperature in the hydration section 23 below a certain threshold under which thermodynamic equilibrium allows hydration to take place (e.g. below 520 °C when partial pressure of steam is about 1 bar). In Fig. 3, the second gas 14 is not only used to cool the particles of decarbonated materials 16 but also to transport them in the dedicated solid-gas heat exchanger or suspension heat exchanger 24 containing gas-solid separators such as a cyclone.

Even if Fig. 3 shows only one solid-gas heat exchanger 44, 24 for the first 2 and second circuit 12 the decarbonation device can comprise more than one cyclone, in particular two cyclones per circuit. Even a higher number of cyclones (3 to 5) can be economically justified, to ensure a more effective preheating of the carbonated material 6 or cooling of decarbonated material 16 by exploiting the counter current gas-solid contact mode achieved in similar suspension preheater or cooler set-ups described in the state of the art.

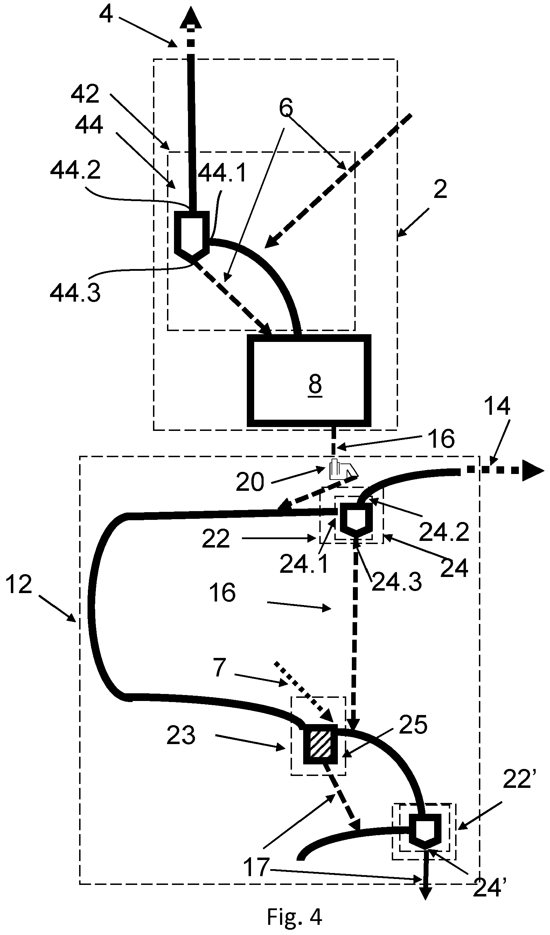

Fig. 4 shows the embodiment of Fig. 3 comprising a further cooling section 22' in which the hydrated particles 17 are transferred and separated from the second circuit 12. The further cooling section 22' is positioned upstream from the hydration section 23 of the second circuit 12. The hydrated particles 17 release in the further cooling section 22' a portion of their thermal energy, thereby heating the second gas 14 flow before said gas 14 enters the hydration section 23

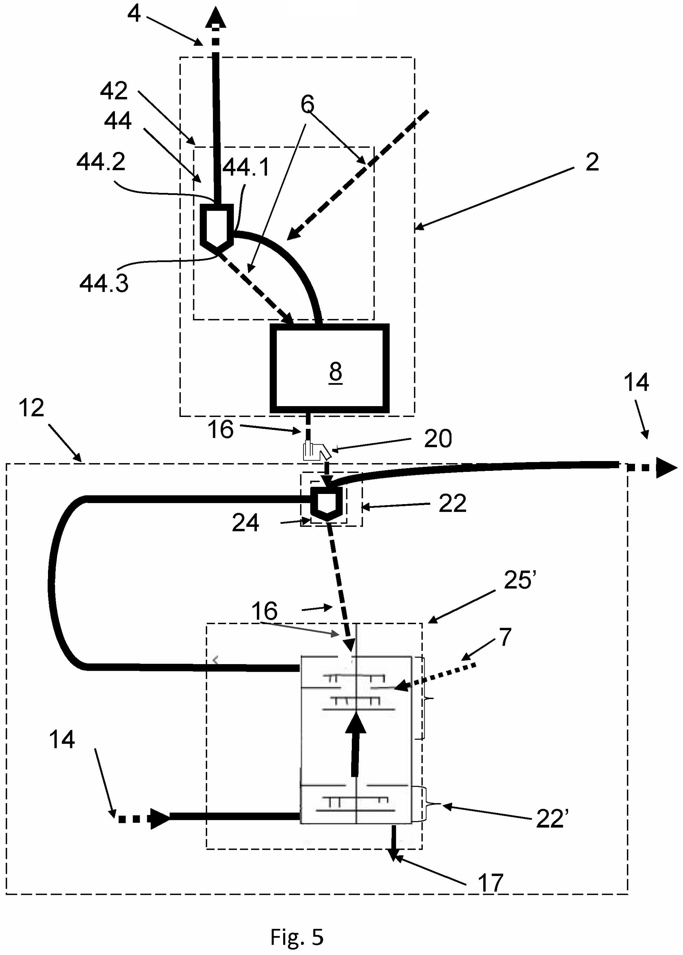

Fig. 5 differs from Fig. 4 in that hydrating section 23 comprises a "paddle mixer" slaker which is the state-of-the-art technology for hydrating lime. It consist typically in several successive chambers in which quicklime reacts with hydration water while being subjected to strong mixing. Paddle mixer slaker 25' depicted in Fig 5. Further comprise a further cooling section 22'.

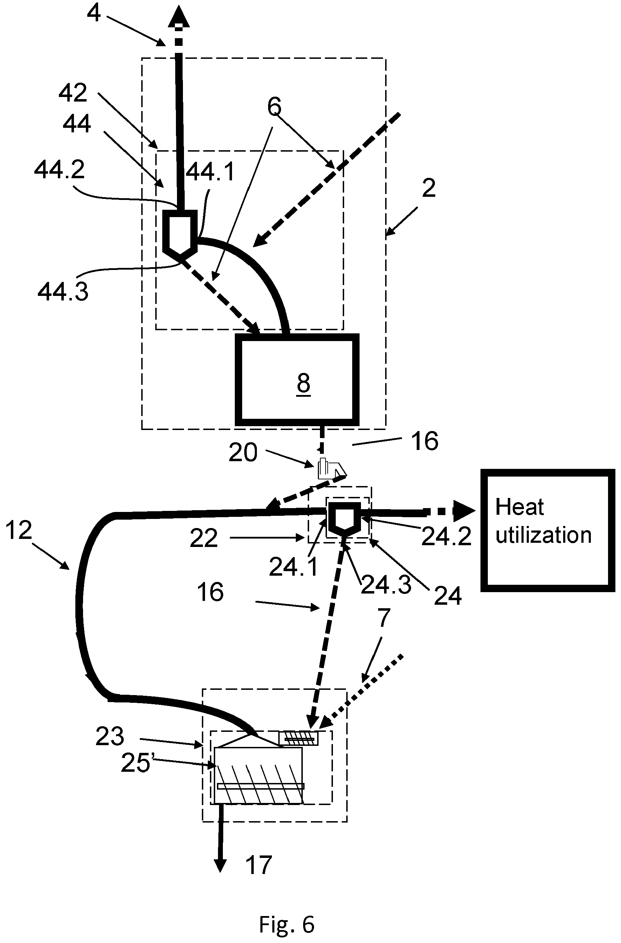

The embodiment in Fig. 6 differs from that of Fig. 3 in that the hydration section 23 comprises a paddle mixer slaker 25' and that the heat contained in the second gas 14 is recovered and used for instance for carbonated material (such as limestone and/or dolomite) preheating, alternative fuel drying, hydrated lime drying, generating mechanical work and/or electricity in a turbine, providing heat for a CO2 treatment process such as an amine gas treating apparatus, a thermal swing adsorption apparatus, or a cryogenic refrigeration apparatus or any CO2 treatment process. The heat contained in the second gas 14 stems from the heat of hydration reaction in the hydration section 23 and sensible heat of the decarbonated particles 16 .

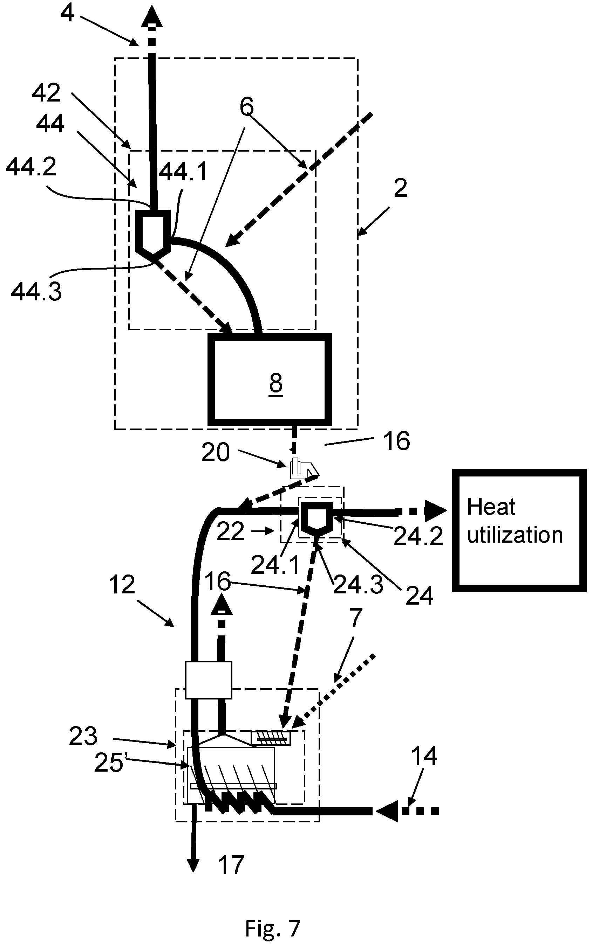

The embodiment in Fig. 7 differs from that of Fig. 6 in that the second gas 14 is heated indirectly by the hydration reaction taking place in the hydration section 23. A first heat exchanger unit, in which the second gas 14 circulates, is provided on one or more paddle mixer slaker 25' walls for absorbing the hydration reaction heat. A second heat exchanger unit is provided downstream from the first heat exchanger unit. Moreover heat from the gas extracted from the slaker 25' is transferred to the second gas 14 via the second heat exchanger unit.

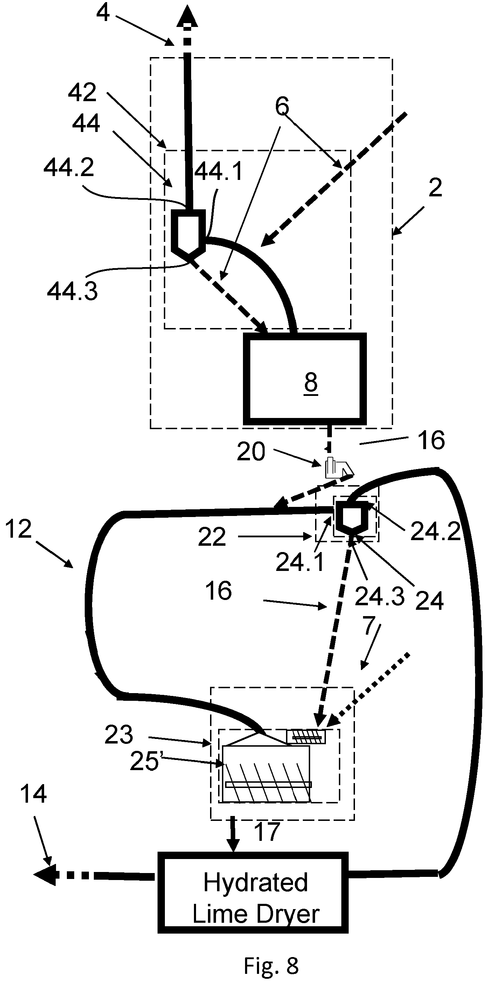

The embodiment in Fig. 8 differs from that of Fig. 6 in that the second gas 14 is fed to a slaked lime dryer for reducing the water content of the hydrates particles 17 extracted from the paddle mixer slaker 25'.

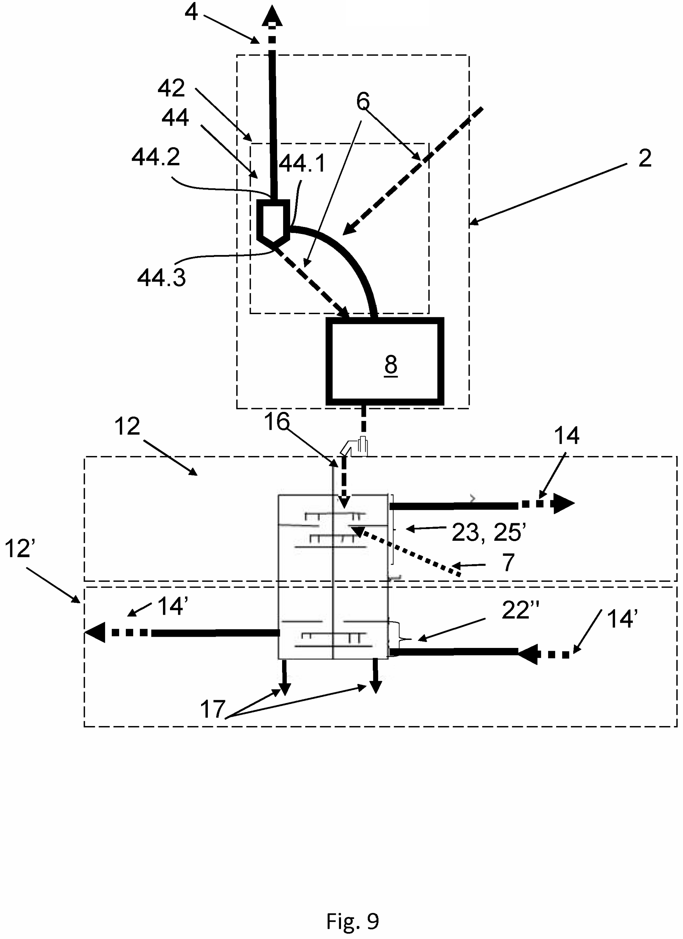

A further embodiment of the invention is shown in Fig. 9. This embodiment differs from that of Fig. 5 in that a third circuit 12' is present. This circuit 12' comprises a cooling section 22" in which the hydrated particles 17 are cooled by a third gas 14' circulating in said third circuit 12'. Moreover, the hydration section 23, 25' comprises a paddler mixer slaker 25' as shown in Fig. 5.

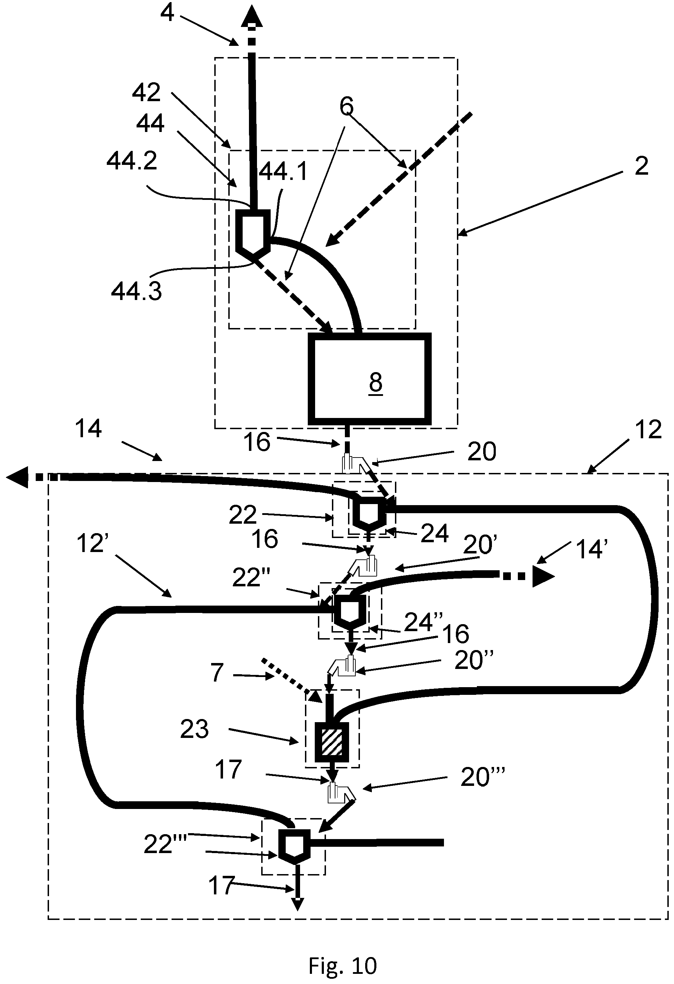

Fig. 10 illustrated a more specific embodiment according to Fig. 1, in which a third circuit 12' is foreseen. In this embodiment, the second circuit 12 and the third circuit 12" are sealed from another. The isolation of the second 12 and third circuit 12' is needed when the corresponding gases 14, 14' present different compositions that should not mix. For instance, the second 14' or third 14" gas may be a sensibly pure oxygen composition to be feed to the reactor 8 as combustive gas (not shown). The dilution of the sensibly pure oxygen composition with another gas containing nitrogen (e.g. air or water and air mixture) is to be avoided because it will reduce the CO₂ purity of the first gas 4 produced in reactor 8.

In Fig. 10, the decarbonated particles 16 separated from the cooling section of the second circuit 2 are transferred from the second circuit 12 to a cooling section 22" of the third circuit 12', in which the third gas 14' circulates. The decarbonated particles 16 are conveyed by said third gas 14' and release a portion of their thermal energy to said third gas 14'. In Fig. 10, the cooling section 22 of the second circuit 12 and the cooling section 22" of the third circuit 12' are separated by a first selective separation means 20' allowing the passage of solids while substantially preventing the passage of the gases 14, 14'.

Subsequently, the decarbonated particles 16 are transferred to the hydration section 23 of the second circuit 12. A second selective separation means 20" allowing the passage of solids while substantially preventing the passage of the gases 14, 14', is arranged between the cooling section 22" of the third circuit 12' and the hydration section 23 of the second circuit 12.

Hydrated particles 17 formed in the hydration section 23 are then transferred to a further cooling section 22‴ of the third circuit 12' in which the hydrated particles 17 release a portion of their thermal energy, wherein the second 12 and third circuits 12' are separated by a third selective separation means 20‴ allowing the passage of solids while substantially preventing the passage of the gases 14, 14'. Finally, once the hydrated particles 17 are cooled to a desired temperature in the further cooling section 22‴, they are separated. The further cooling section 22‴ is arranged upstream from the cooling section 22" of the third circuit 12'.

The embodiment in Fig. 10 allows adjusting temperature of the different streams in order to control temperature in the hydrating section 23 and optimizing recovery of the sensible heat.

At least one selective separation means 20, 20', 20", 20‴ illustrated in Fig.10 comprise or consist in a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve.

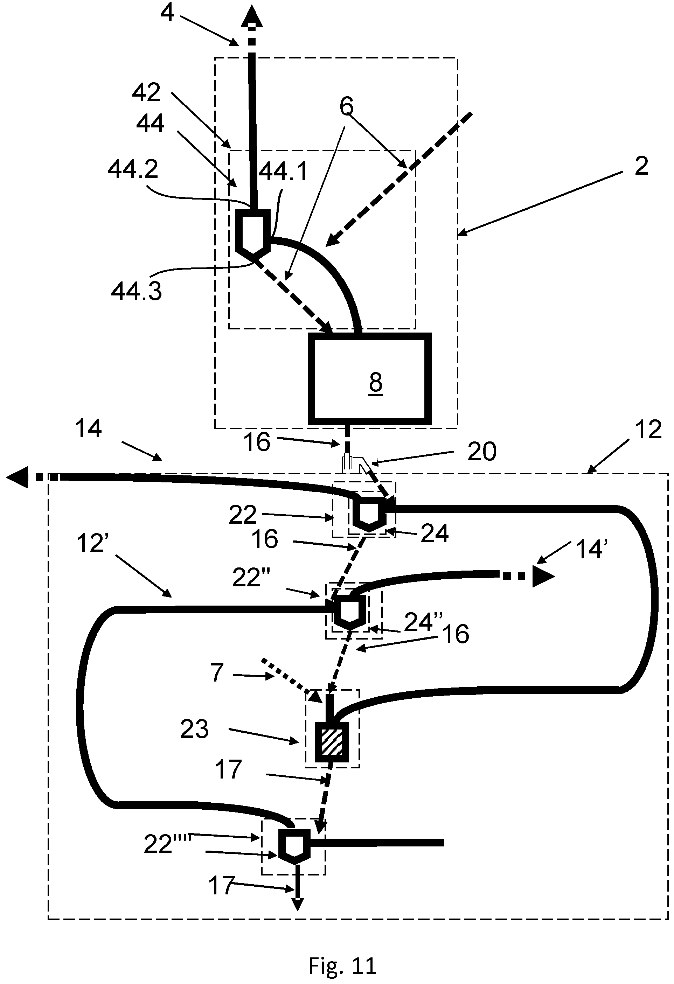

The embodiment in Fig. 11 is similar to that of Fig. 10 except that the first, second and third selective separation means 20', 20", 20"' arranged between the second 12 and third 12' circuits are removed to simplify the general design in case a sealed interface between the second 12 and third 12' is not required, for instance when pressure differences or gas compatibility between these circuits 12, 12' permit such a simplification.

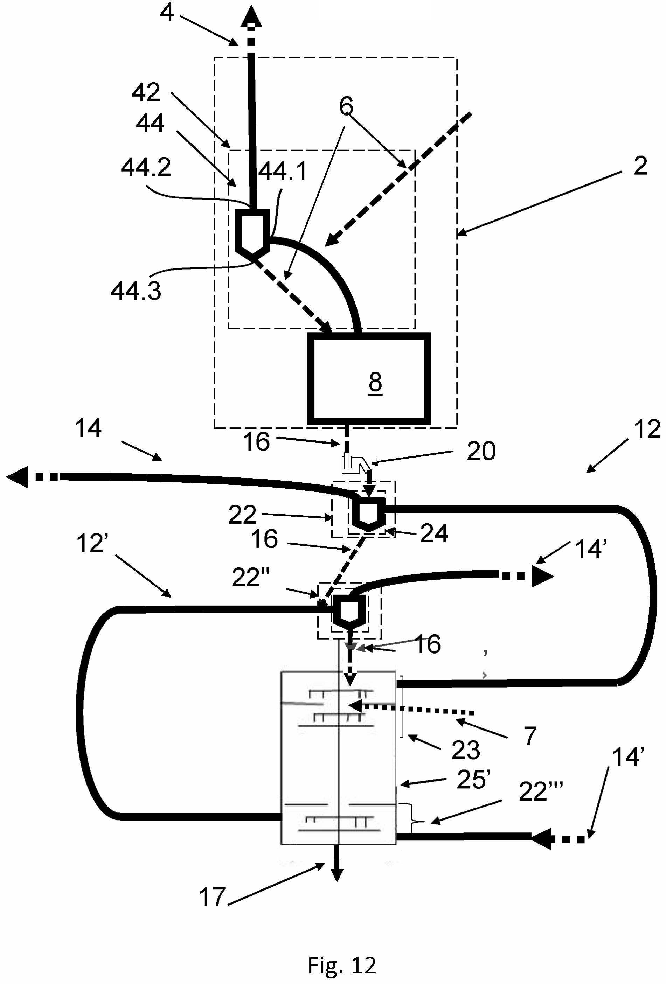

The embodiment in Fig. 12 differs from that in Fig. 11 in that the hydration unit 23 comprises a paddle mixer slaker 25' with a further cooling section 22‴ arranged below the hydration section 23 in which a third gas 14' of the third circuit 12' circulates.

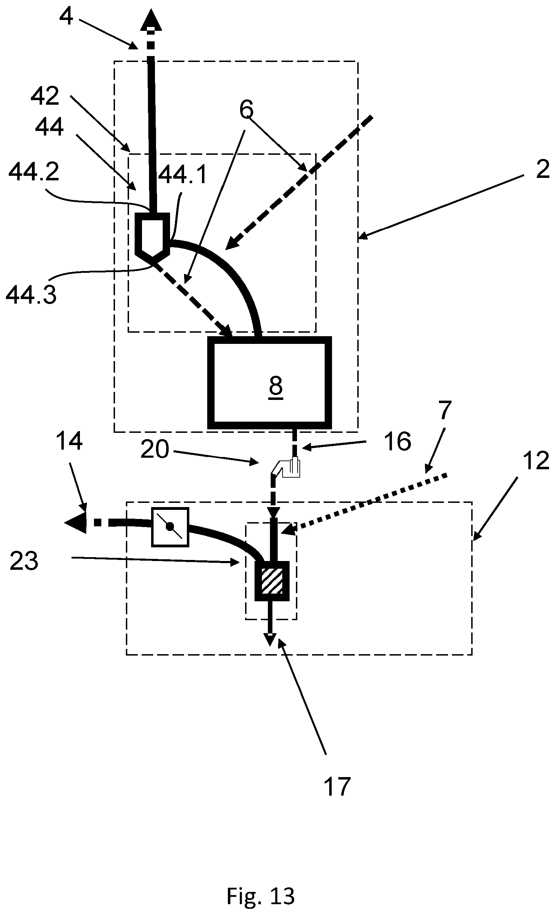

The temperature, at which hydration reaction take place is limited by an upper threshold. For instance 520 °C when partial pressure of H₂O is around 1 bar. Above this temperature the equilibrium is inverted and the calcium hydrate decomposes into quicklime and water. Therefore, without any compensating measures, the heat of the hydration reaction can only be recovered at relatively low temperature. In order to overcome this limitation, Fig.13 represents a further embodiment of the invention in which the pressure in the hydration section 23 is maintained above the atmospheric pressure, in particular above at least 1 bar above the atmospheric pressure using a valve arranged in the second circuit 12 and/or a compressor (not shown). Increasing the pressure in the hydration section 23 enables to shift the hydration equilibrium temperature towards higher temperature. For instance, one can perform hydration at (around) 560 °C (respectively 670 °C) if pressure in the hydrating section 23 is (around) 2 bars (respectively 10 bars).

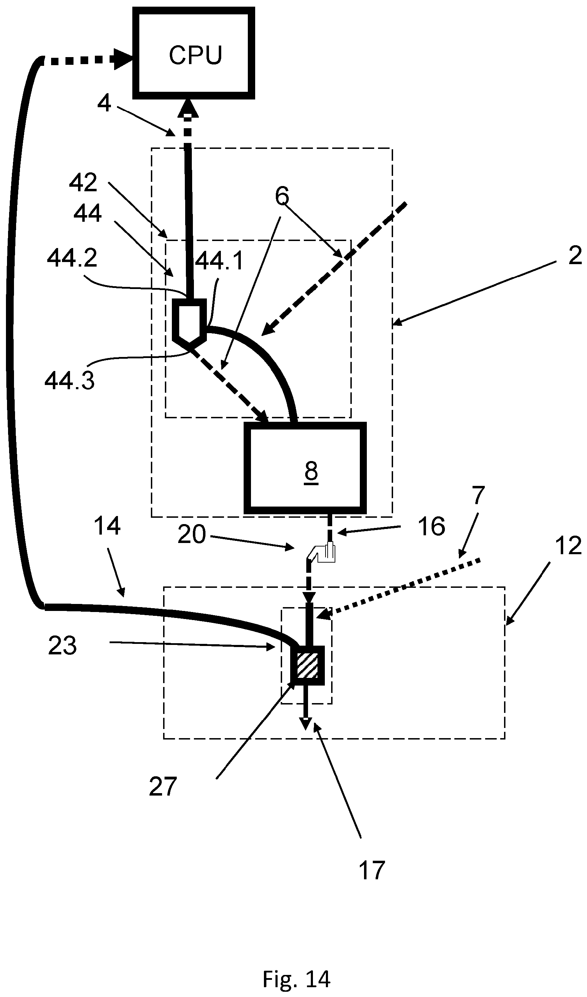

The embodiment illustrated in Fig. 14 differs from that of Fig. 2 in that a compression and purification unit CPU is positioned downstream from the first circuit 2 so that the first gas 2 is purified before being for instance sequestered. The heat recovered from the second circuit 12 is used by the compression and purification unit CPU comprising for instance a cryogenic refrigeration apparatus.

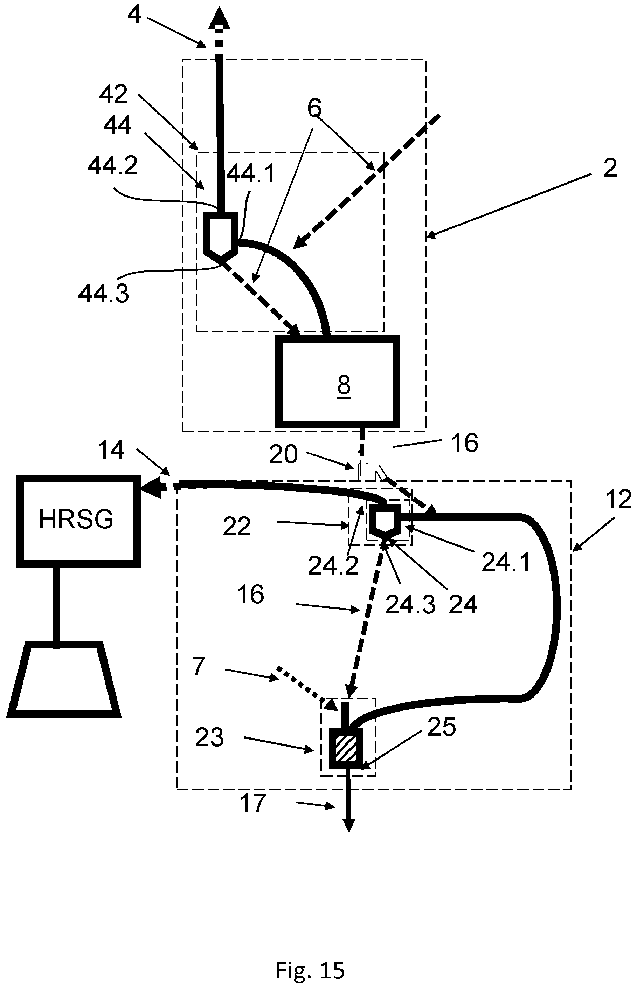

The embodiment represented in Fig. 15 differs from Fig. 3 in that it comprises an arrangement enabling the production of high pressure and temperature steam in a heat recovery steam generator (HRSG) for subsequent usage in a steam turbine. Preferably, the modelized operating conditions for this embodiment are the followings:
- Pressure in hydrating section 23 is (about) atmospheric pressure;
- Decarbonated material 16 consist in quicklime CaO and is fed in hydrating section at (about) 450 °C;
- Liquid water (7) is fed in hydrating section at (about) 20 °C;
- Water/quicklime stoichiometric ratio is fixed at 2.57 mol/mol or equally 0.826 kg of water per kg of quicklime;
- Hydration reaction enthalpy is (about) 1.1 MJ/kg of quicklime (exothermal);
- Temperature of Ca(OH)₂ product and excess water after completion of hydration reaction is is (about) 124 °C;
- (About) 1.32 kg of hydrated material Ca(OH)₂ 17 is produced and discharged from hydration reactor;
- Excess water is vaporized resulting in a steam flow 14 of (about) 0.50 kg at (about) 124 °C which is equivalent to a thermal energy flow rate of (about) 1.33 MJ/ kg of quicklime;
- Steam flow 14 corresponds to (about) 0.63 Nm3 to per kg of quicklime and is used as second entraining gas in cooling section 22;
- Decarbonated material 16 is fed in cooling section 22 at (about) 950 °C, thereby releasing a portion of its thermal energy to the second entraining gas 14;
- Second entraining gas 14 therefore leaves cooling section 22 heated to (about) 618 °C corresponding to a thermal energy flow rate of (about) 1.82 MJ/kg of quicklime;
- Said second entraining gas 14 is sent to a heat recovery steam generator to produce high pressure steam able to run a steam turbine (about 40 % energy efficiency) producing (about) 202 kWh of electricity per kg of quicklime.

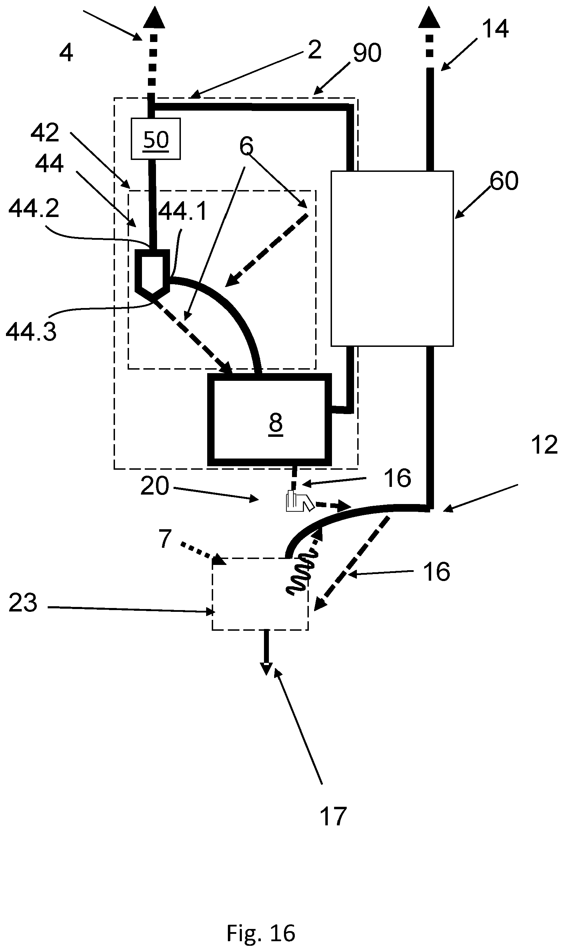

Fig. 16 shows a further embodiment comprising two gas circuits, namely the first 2 and the second 12 circuit, wherein the circuits 2, 12 are kept separated with a single sealing device 20 (a selective separation means, in particular a loop seal). In this embodiment, the entirety of the gas resulting from the calcination (first gas 4 leaving the reactor 8) can be processed through an evaporative condenser 50, removing H₂O, allowing to reach a high level of CO₂ (e.g. CO₂>85% dry vol.). Part of the dry gas 4 abandoning the evaporative condenser 50 is removed from the first circuit 2 as dry first gas 4, to be conditioned for carbon sequestration (CCS) or carbon utilization (CCU), while the rest is recirculated back into the first circuit 2 via a recycling passage 90. A source of relatively pure O₂ is either mixed with the recirculated first gas 4 or is introduced in the reactor 8 close to the fuel injection area(s). The quantities of O₂ and fuels injected are adjusted to ensure that the waste heat in the gases after combustion and calcination is just sufficient to adequately preheat the incoming carbonated materials 6 while also maintaining a gas exit temperature just high enough to avoid H₂O condensation, which avoids fouling of the dust filter. The recirculated calcination gas or the mixture of recirculated calcination gas and pure O₂ is then preheated in a gas-to-gas heat exchanger 60 with the energy from the second circuit 12 gas reclaimed from the cooling of particles of decarbonated materials 16 and the heat generated during the hydration of the said materials. The preheated recirculated gas is then directed back into the calcination zone (reactor 8) for combustion of a suitable fuel stream entering the reactor 8.

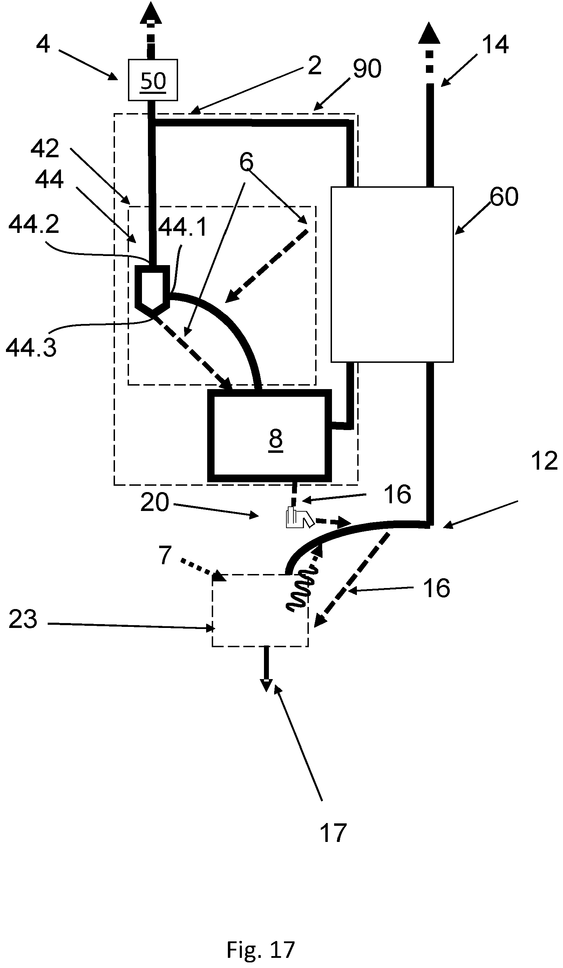

The embodiment in Fig. 17 differs from the embodiment in Fig. 16 in that moisture-laden calcination gas (first gas 4) is recirculated (stream 90) back into the reactor 8 and in that only the removed, first gas 4, is dried. This results in a higher moisture content in the calcination zone of the reactor 8 which lowers the partial pressure of CO₂, thereby aiding the liberation of CO₂ from the carbonated material 6 in reactor 8. This can slightly lower the peak temperature needed in the calciner as well as possibly influence the water reactivity (T₆₀) of the product (e.g. lime).

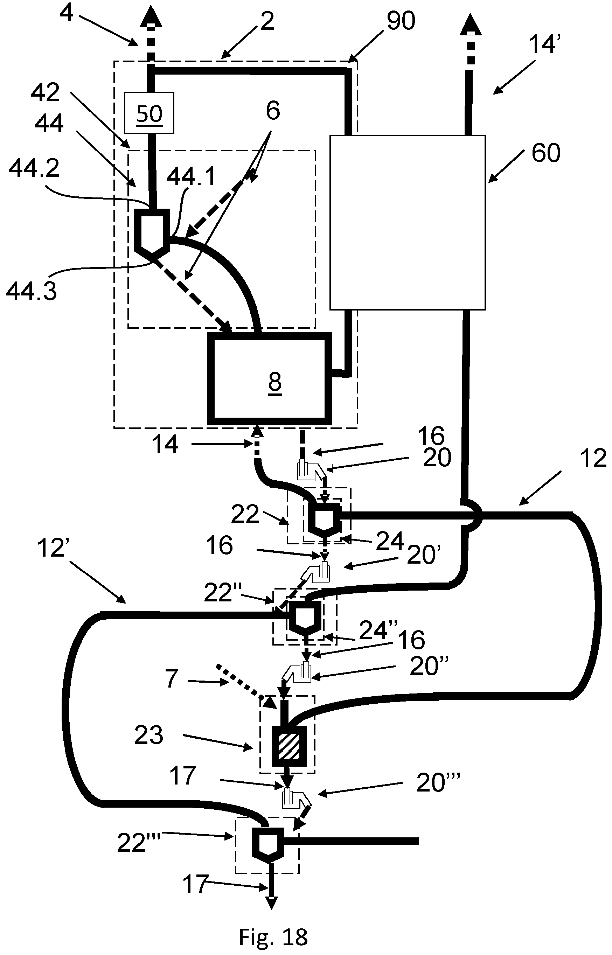

The embodiment illustrated in Fig.18 differs from that in Fig.16 in that the recirculated calcination gas or the mixture of recirculated calcination gas and pure O₂ is then preheated in a gas-to-gas heat exchanger 60 with the energy from the third circuit 12' gas reclaimed from the cooling of particles of decarbonated materials 16 and the hydrated materials 17. The preheated recirculated gas is then directed back into the calcination zone (reactor 8) for combustion of a suitable fuel stream entering the reactor 8. Furthermore, the second gas 14 essentially consists in a combination of a combustive gas (e. g. relatively pure O₂) alone or in combination with H₂O. The second gas 14 is heated by the sensible heat of the decarbonated material 16 and the hydration reaction heat is fed in the reactor 8. The introduction of H₂O (water steam) in the reactor 8 allows to limit the peak calcination temperature. Further, H₂O can be easily removed from the first circuit 2 via the condenser 50 producing a relatively pure CO₂ stream.

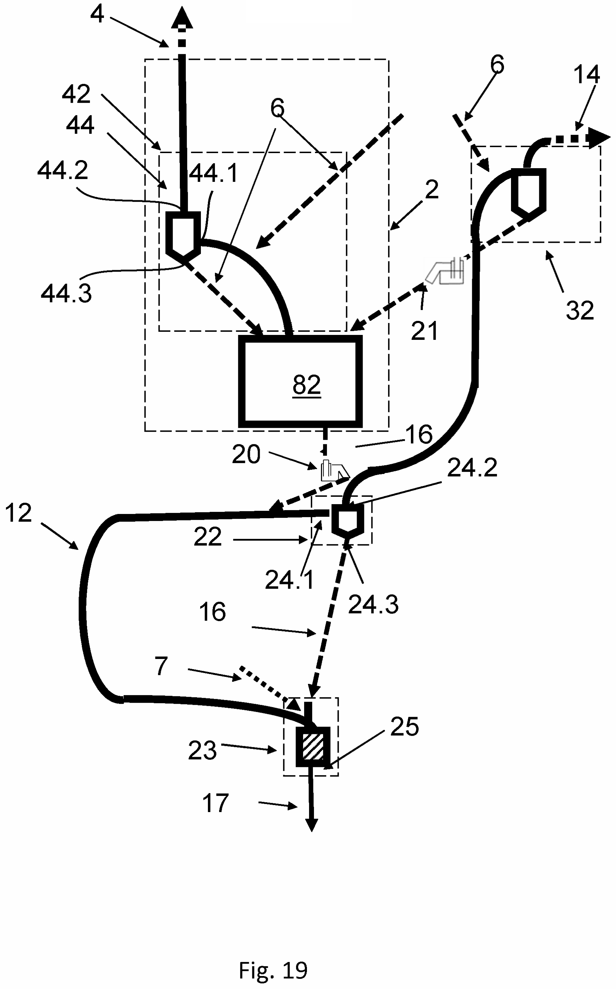

The embodiment in Fig. 19 differs from that in Fig. 3 in that two gas circuits 2, 12 are kept separated by further sealing device (i.e. selective separation means) 21 and in that a heating section 32 is arranged downstream from the cooling section 22 of the second circuit 12. Contrary to the embodiment in Fig. 17, there is no recirculation of any gases back into the calcination circuit (first circuit 2). The fuel (not shown in Fig. 19) is combusted with substantially pure oxygen. The calcination gas (first gas 4) can be processed through an evaporative condenser (not shown) removing the H₂O resulting in a CO₂>85% dry vol. for sequestration or usage. Since the energy in the first gas 4 just after combustion and calcination is not sufficient to preheat 100% of the carbonated material 6, only a portion of the ambient temperature carbonated material 6 is conveyed into the calcination circuit (first circuit 2) for preheating. The maximal pre-heatable quantity of material 6 is conveyed into the calcination circuit to make sure that it is adequately preheated (about 800°C) before it enters the calcination zone (reactor 8, in particular an oxy-burner 82). The balance of carbonated material 6 is conveyed into a heating section 32 in the second circuit 12 (preferably a gas-solid suspension type 34) downstream of the hot second gas 14 exiting the product cooling heat exchanger (cooling section 22) and the hydration section 23. The hot second gas 14 accomplishes the preheating of this portion of the carbonated material 6, which is then directly sent into the calcination zone (reactor 8, in particular an oxy-burner 82) of the calcination circuit (first circuit 2). A second sealing device (i.e. selective separation means) 21 can be provided to transfer the preheated carbonated material 6 leaving the carbonated material preheating heat exchanger 34 in the second circuit 12, directly into the calcination zone of the calcination circuit, bypassing the preheating heat exchanger 42 in the calcination circuit 2.

The advantage of this embodiment is that it eliminates the relatively expensive and possibly maintenance-intensive gas-to-gas heat exchanger 60 of the previous two embodiments.

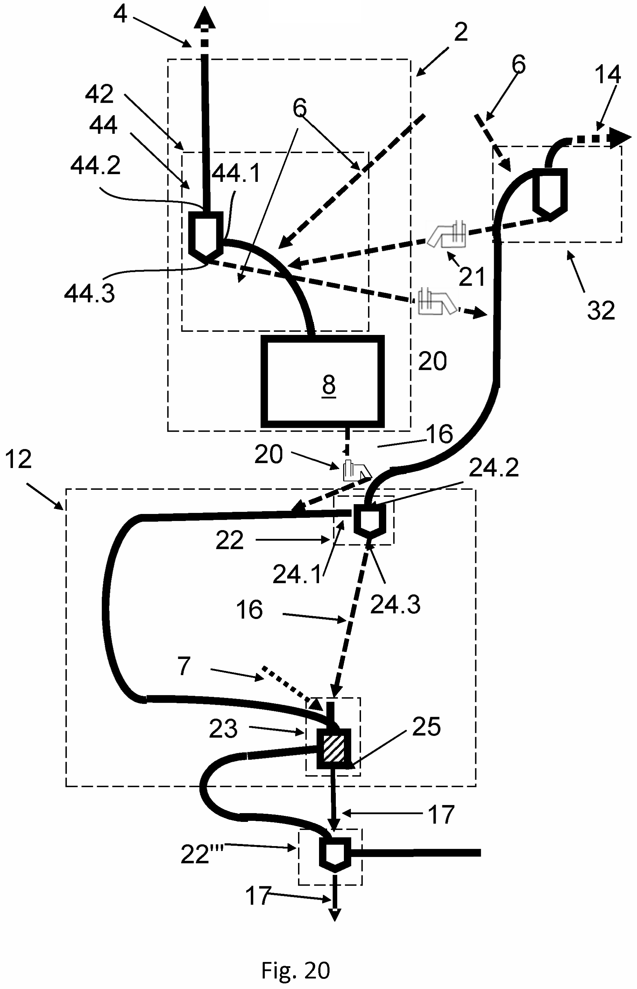

In the embodiment illustrated in Fig. 20, the two gas circuits 2 and 12 are kept separated by possibly three or more sealing devices (i.e. selective separation means) 20, 21. This solution allows a stage heating (with a couple of steps) of the carbonated particles 6, in order to reduce the temperature differences during the heat exchanges. In this embodiment, there is no recirculation of any gases back into the calcination circuit.
Preferably, the modelized operating conditions for this embodiment are the followings:
- Pressure is (about) atmospheric pressure;
- Decarbonated material 16 consist in quicklime CaO and is fed in hydrating section at (about) 450 °C;
- Liquid water (7) is fed in hydrating section at (about) 20 °C;
- Water/quicklime stoichiometric ratio is fixed at 1.5 mol/mol or equally 0.48 kg of water per kg of quicklime;
- Hydration reaction enthalpy is (about) 1.1 MJ/kg of quicklime (exothermal);
- (About) 1.32 kg of hydrated material Ca(OH)₂ 17 is produced and discharged from bottom of the hydration to a further cooling section 22‴ ;
- Temperature of Ca(OH)₂ product is cooled in section 22‴ to (about) 100 °C by a flow of ambient air equivalent to 2.16 kg/ kg of quicklime;
- Said air is used as diluting gas in the hydrating section 23 and mixes with 0.16 kg of excess water (vaporized) to form a second gas 14 at temperature of (about) 368 °C
- Second gas 14 corresponds to (about) 1.93 Nm3 per kg of quicklime and is used as second entraining gas in cooling section 22;
- Decarbonated material 16 is fed in cooling section 22 at (about) 900 °C, thereby releasing a portion of its thermal energy to the second gas 14;
- Second gas 14 therefore leaves cooling section 22 heated to (about) 529 °C and is used as entraining gas in second preheating section 32, thereby releasing a portion of its thermal energy to the carbonated material 6;
- (About) 1.76 kg of limestone (carbonated material 6) is fed to reactor 8 with (about) 3.5 GJ of methane and corresponding amount of substantially pure oxygen;
- First gas 4 consist in a mixture of CO₂ and steam resulting from combustion of methane and decarbonation of carbonated materials at (about) 900 °C;
- First gas 4 corresponds to (about) 0.7 Nm3/kg of quicklime and is used as entraining gas in first preheating section 42, thereby releasing a portion of its thermal energy to the carbonated material 6;
- First and second preheating sections consist in a staged arrangement of gas suspension heat exchangers allowing preheating of carbonated material 6 from 20°C to (about) 874 °C prior to feeding in reactor 8;
- First gas 4 (respectively second gas 14) leaves first preheating section 42 (respectively second pre-heating section) at (about) 243 °C (respectively (about) 246 °C)

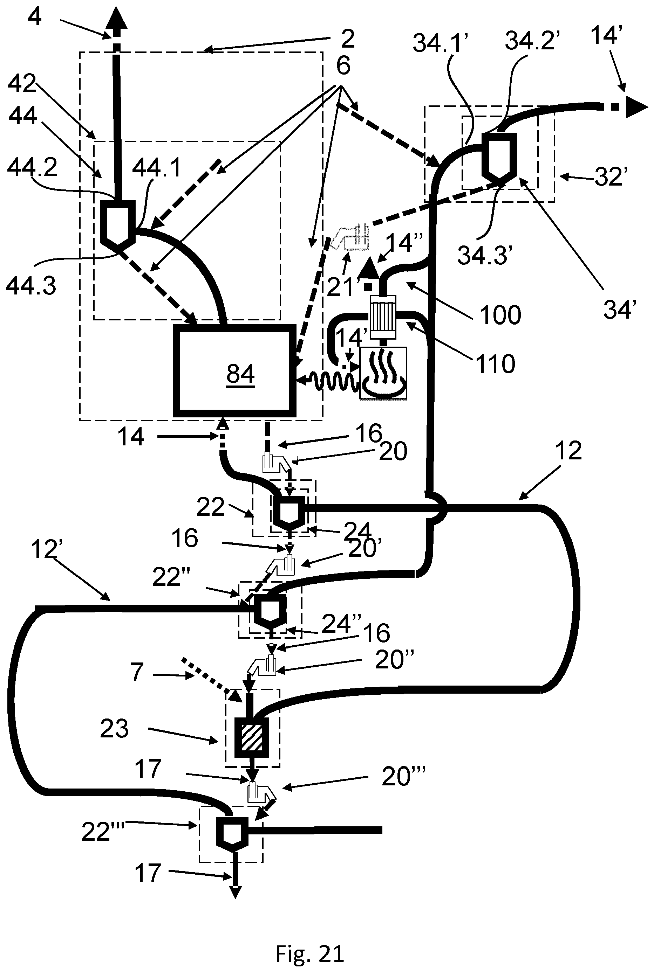

The embodiment represented in Fig. 21 differs from that in Fig. 18 in that at least a part of the third gas 14' (comprising for instance air heated by the decarbonated particles 16 in the cooling section 22 and the hydrated particle 17 in the further cooling section 22‴) is used for the burner of the indirect calciner 84. Contrary to the embodiment in Fig. 18, there is no recirculation of any gases back into the calcination circuit (first circuit 2). The hot third gas 14' accomplishes the preheating of a portion of the carbonated materials 6, which is then directly sent into the burning zone of the indirect calciner 84, via a sealing device (i.e. selective separation means) 21.

The reactor 8 in Fig. 21 is an indirect calciner 84, whose exhaust gas is fed into the third circuit 12" via an exhaust passage 100. The exhaust passage 100 is connected downstream from the cooling section 22" of the third circuit 12'. The mix of heated air from the cooling section 22" and combustion gas is then used to preheat carbonated materials 6. The preheated carbonated materials 6 are then sent to the calcination zone (reactor 84) of the first circuit 2.

Furthermore, Fig. 21 shows an intake passage 110 for transferring at least a portion of the third gas 14' to the burner. The intake passage 110 is connected downstream from the cooling section 22 of the third circuit 12'. Alternatively, the air for the burner can be heated via a heat exchanger exchanging heat from the second circuit 12 and the air for the burner (not shown). This way of reclaiming energy is a further possibility for minimizing specific energy input.

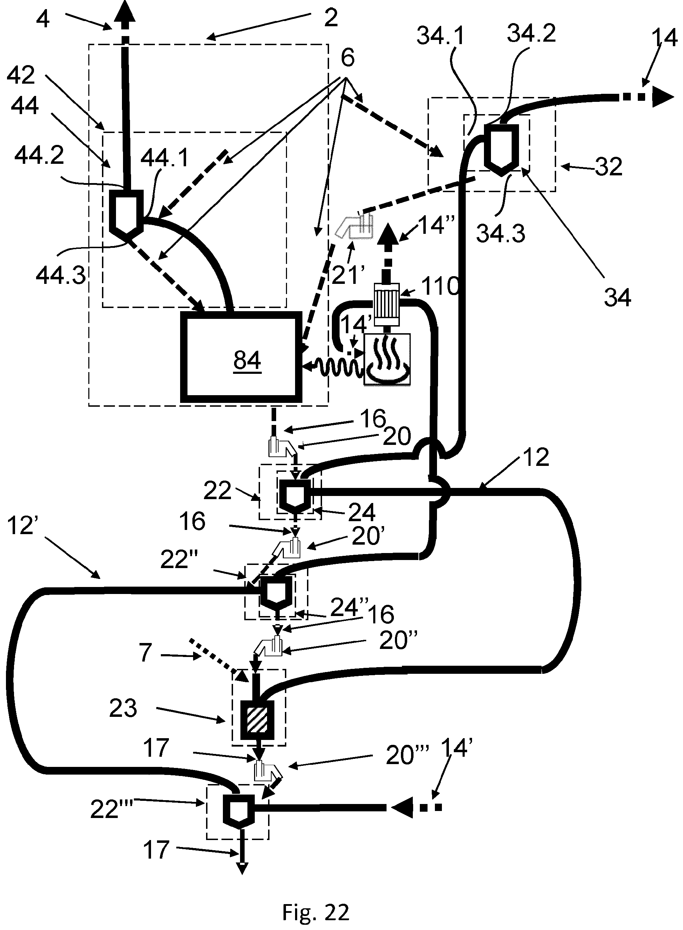

The embodiment according to Fig. 22 differs from that in Fig. 21 in that the second gas 14 and not the third gas 14' accomplishes the preheating of a portion of the carbonated materials 6, which is then directly sent into the burning zone of the indirect calciner 84.

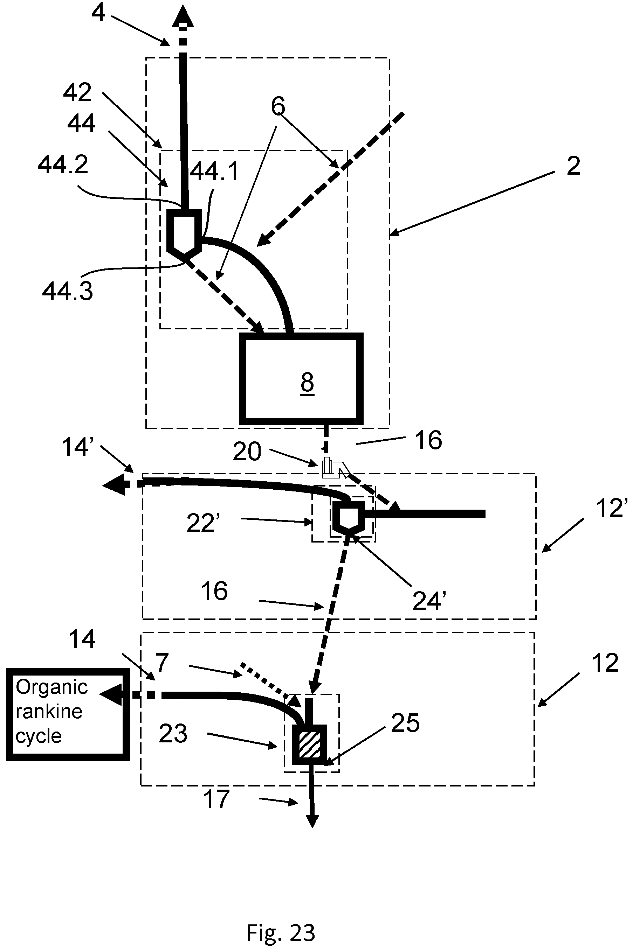

In the embodiment shown in Fig. 23, the decarbonated particles 16 are cooled down in a cooling section (22") of the third circuit (12') before being transferred to the hydration section (23) of the second section (12). The embodiment of Fig. 23 differs from the embodiment in Fig.3 to the extent that the decarbonated particles 16 exiting the first circuit 2 at a temperature of typically above 900°C are cooled by a gas stream that is not involved in the hydration. The hydration heat is recovered for the generation of electricity in a low temperature organic rankine cycle. Preferably, the modelized operating conditions for this embodiment are the following
- Pressure in hydrating section 23 is (about) atmospheric pressure;
- Decarbonated material 16 consist in quicklime CaO and is fed in hydrating section at (about) 450 °C;
- Liquid water 7 is fed in hydrating section at (about) 20 °C;
- Water/quicklime stoichiometric ratio is fixed at 2.1 mol/mol or equally 0.675 kg of water per kg of quicklime;
- Hydration reaction enthalpy is (about) 1.1 MJ/kg of quicklime (exothermal);
- Temperature of Ca(OH)₂ product and excess water after completion of hydration reaction is (about) 281 °C;
- (About) 1.32 kg/kg (quicklime) of hydrated material Ca(OH)₂ 17 is produced and discharged from hydration reactor;
- Excess water is vaporized resulting in a steam flow rate 14 of (about) 0.35 kg/kg (of quicklime) at (about) 281°C corresponding to a thermal energy flow rate of (about) 1.03 MJ/ kg of quicklime;
- Low pressure steam flow 14 is used to run an organic rankine cycle turbine (about 15% energy efficiency) producing (about) 43 kWh of electricity per kg of quicklime.

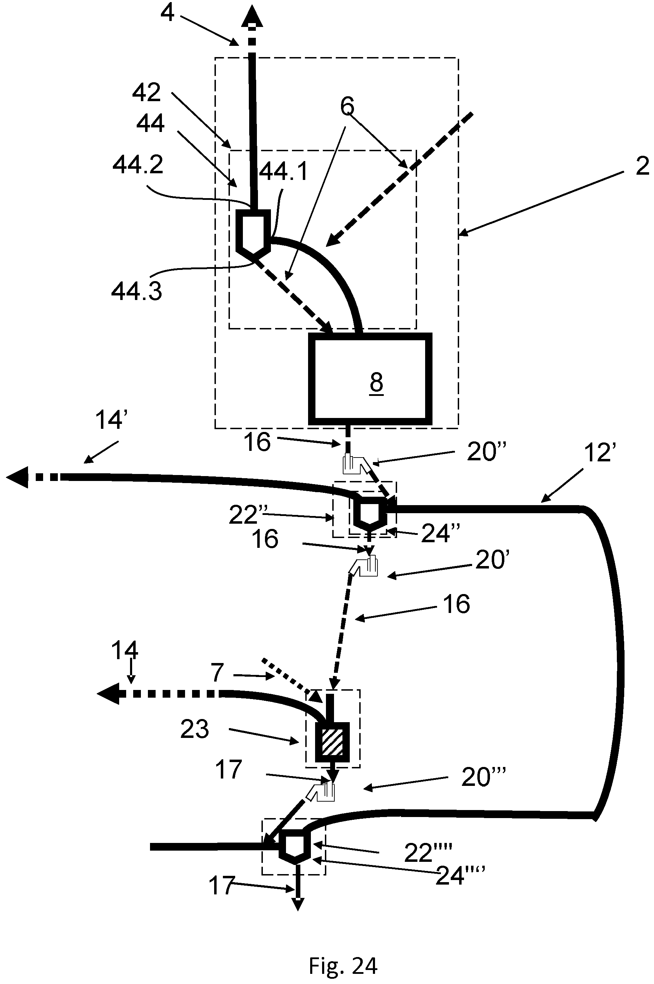

The embodiment in Fig. 24 differs from that of Fig. 23 in that the third circuit 12' comprises a further cooling section 22‴ positioned upstream from said cooling section 22", where the hydrated particles 17 are cooled. Even if the embodiment in Fig. 24 does not present a recovery unit, such means for recovery the heat energy can be provided.

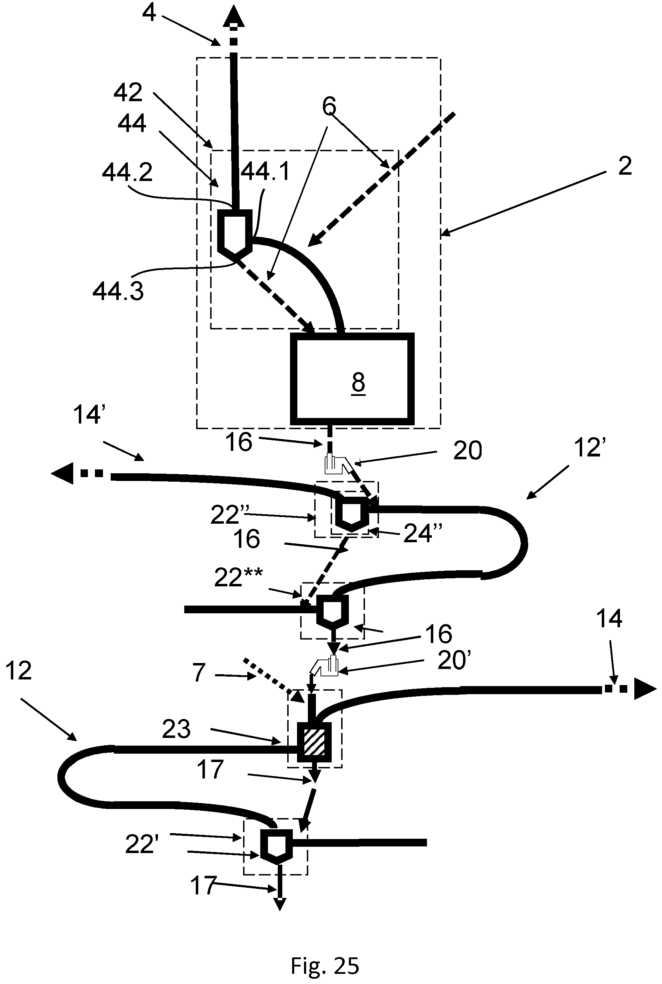

The embodiment in Fig. 25 differs from that of Fig. 23 in that the third circuit 12' comprises an additional cooling section 22** positioned upstream from the cooling section 22", where the carboned particles 16' are further cooled before there are fed to the hydration section 23. Furthermore, the second circuit 12 comprises a further cooling section 22' positioned upstream from the hydration section 23. Even if the embodiment in Fig. 25 does not present a recovery unit, such means for recovery the heat energy can be provided.

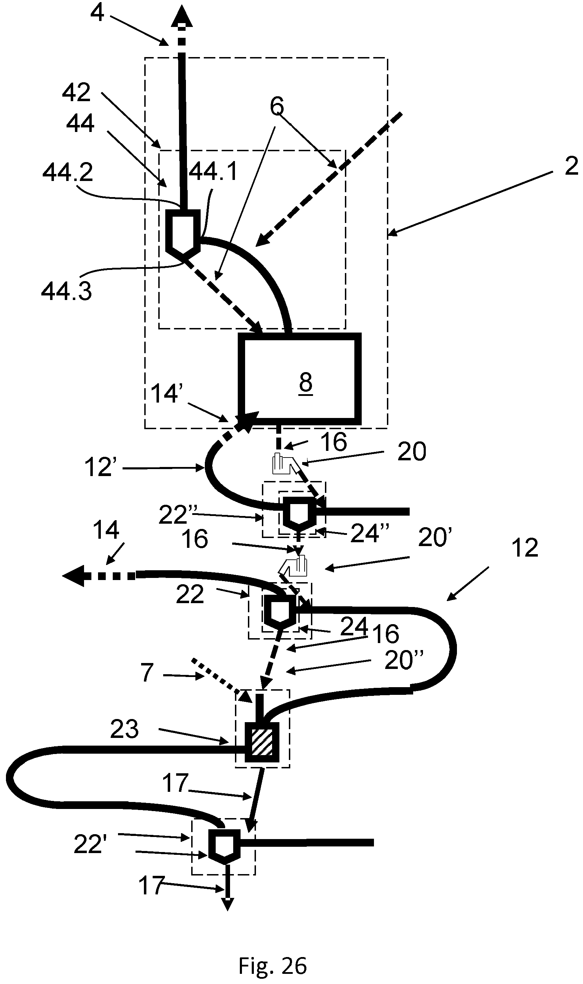

The embodiment in Fig. 26 differs from that of Fig. 23 in that the third circuit 12' is fed with a combustion gas, for instance a dioxygen enriched composition. The dioxygen enriched composition is heated by the decarbonated particles 16 directly leaving the first circuit 2, transferred in the cooling section 22". Furthermore, the second circuit 12 comprises a cooling section 22 positioned downstream from said hydration and a further cooling section 22' positioned upstream from the hydration section 23.

The present invention describes measures for managing two separate gas circuits 2, 12 and optionally a third one 12': one for carbonated material transport, preheating and calcination, and another for product transport, product cooling and hydration and possibly carbonated materials transport and preheating. The calcination circuit gases will be relatively free of N₂ comprising mostly CO₂ and H₂O while the second 12 and third 12' circuits will be relatively free of CO₂. Optionally, as a post-processing step, dust is removed from both or all circuit's gases. Furthermore, the H₂O can be removed from the calcination gases with, for example, an evaporative condenser resulting in a relatively pure stream of CO₂>85% dry vol. If required by the end use of this CO₂ stream, other treatment steps can be included in the calcination circuit for the removal of other contaminants such as trace amounts of O₂, N₂, and other residual gases.

Lime or hydrated lime can be used as sorbent for capturing CO₂ from a flue gas or air according to a process known as calcium looping. Any of the previous embodiments can be selected for producing such a sorbent. Lime carbonation being a solid-gas reaction, this reaction tends to occur firstly on the outer surface of lime particles. Carbonation to the core of the particles is slow due to the diffusion. Furthermore, Ca(OH)₂ sorbent is not optimal in regard to carbonation reaction enthalpy, as discussed in the following paragraph. Consequently, the hydration in the hydration section 23 can be performed as a partial hydration. In practice such a partial hydration could be more easily achieved in steam hydrator than liquid hydrator.

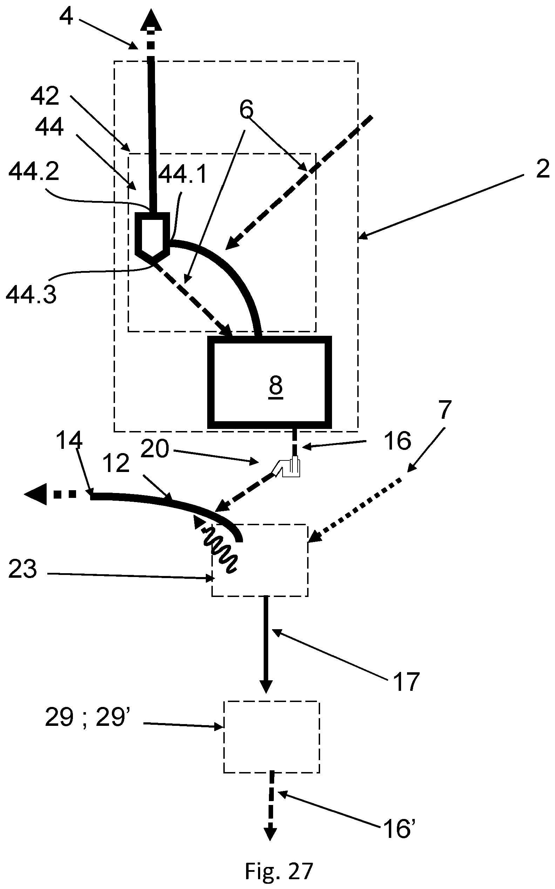

The embodiment in Fig. 27 is aimed to produce decarbonated materials 16' (e.g. CaO) that will be used as a sorbent to be in contacted with CO₂-containing flue gas.

Due to its morphology, hydrated lime Ca(OH)₂ is more efficient than quicklime CaO at capturing CO₂ (particle size in the range < 100 µm, high surface area/porous volume). Indeed, the hydration process during which the hydrated lime is produced enhances the surface area/porosity of the product. However, quicklime has the advantages of releasing more energy than calcium hydroxide when undergoing carbonation reaction. This high reaction energy is useful for reaching high temperature that favours carbonation reaction.

The embodiment according to Fig. 27 comprises an intermediate step of forming hydrated particles 16 (e.g. hydrated lime) according to any of the embodiments shown in the previous figures. The embodiment in Fig. 27 does not show a third circuit 12' for stake of simplicity, but such a circuit can be integrated. The hydrated particles 17 (e.g. hydrated lime) present an increased surface area/porous volume compared to the decarbonated particles 16 exiting the first circuit 2. In Fig. 27, the hydrated particles 17 formed in the hydration section 23 are fed to a dehydrating section 29, 29' where the hydrated particles 17 (hydrated lime) are reconverted into (further) decarbonated particles 16' (quicklime) keeping the high surface area/porous volume of the intermediate product, in particular hydrated lime 17. This measure allows to obtain a highly-reactive sorbent (e.g. morphology) which releases more energy when undergoing carbonation in contact with a CO₂ containing gas.

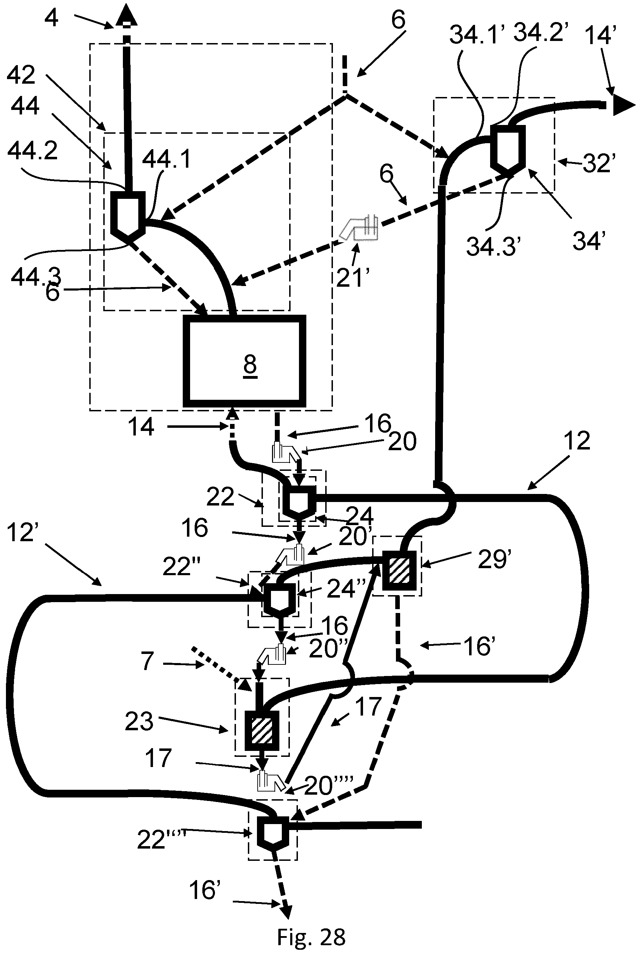

The embodiment according to Fig. 28 is a more specific embodiment of that of Fig. 27. The embodiment of Fig. 28 is based on that of Fig. 21 in which the burner supplied with the third gas 14' is removed. Compared to Fig. 21, the hydrated particles 17 produced in the hydration section 23 are transferred to a dehydrating section 29' arranged on the third circuit 12'. The hydrated particles 17 in the presence of heat (T> 520°C under P_{H2O} = (around) 1 bar) release H₂O forming (further) decarbonated particles 16. The (further) decarbonated particles 16 are then transferred to a complementary cooling section 22ʺʺ in the third circuit 12' arranged upstream from the cooling section 22" of the third circuit 12', in which the said (further) decarbonated particles 16' release a portion of their thermal energy. The (further) decarbonated particles are then separated in the complementary cooling section 22"".

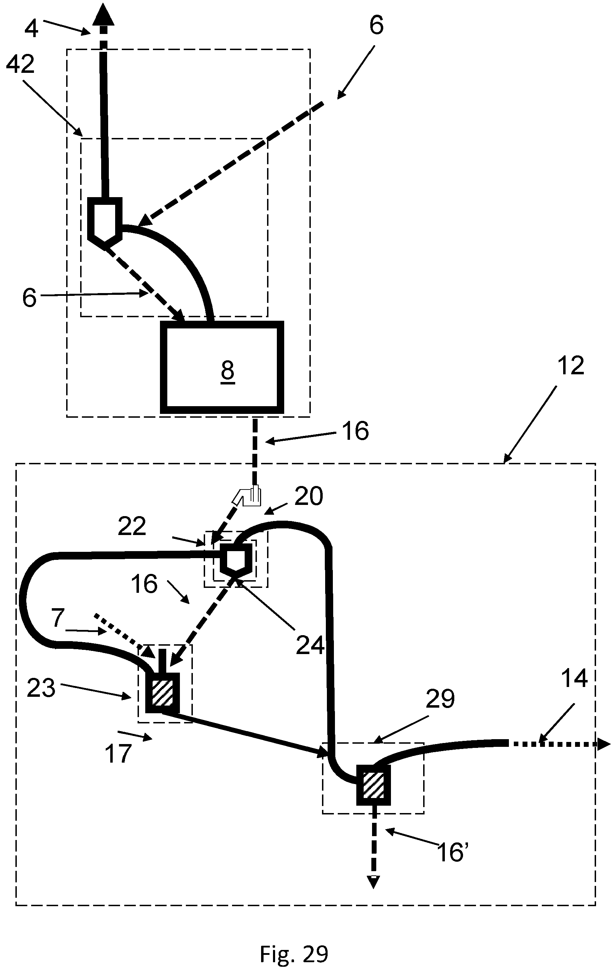

The embodiment according to Fig. 29 is another embodiment derived from Fig. 27. The embodiment of Fig. 29 differs from that of Fig. 3 in that the dehydrating section 29 is positioned downstream from the cooling section 20 of the second circuit 12. The hydrated particles 17 produced in the hydration section 23 are transferred to the dehydrating section 29, in which the hydrated particles 17 in the presence of heat (T> 520°C under P_{H2O} = (around) 1 bar) from the second gas 14 release H₂O forming decarbonated particles 16'.

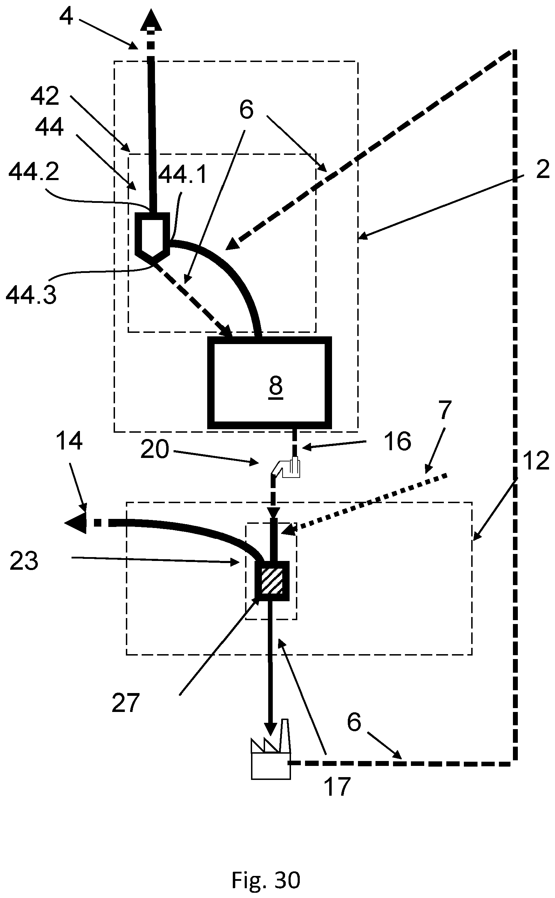

The embodiment in Fig. 30 illustrates a CO₂ capture process known as calcium looping in which a sorbent, namely hydrated materials/particles 17 (e.g. hydrated lime) is contacted with CO₂-containing gas and is then converted into carbonated materials/particles 6 (e.g. calcium carbonates). The embodiment in Fig. 30 does not show a third circuit 12' for sake of simplicity, but such a circuit can be integrated. Typically, a CO₂-containing gas is for instance a flue gas or air, or mixture thereof. The carbonated materials/particles 6 (e.g. calcium carbonate) are then sent to a calciner (i.e. the first circuit 2) and subsequently to the hydration section 23, in order to regenerate the sorbent, namely hydrated materials/particles 17 (e.g. hydrated lime) while at the same time producing a concentrated stream of CO₂. The calcium looping process can also be used to capture CO₂ from the atmosphere for subsequent sequestration.

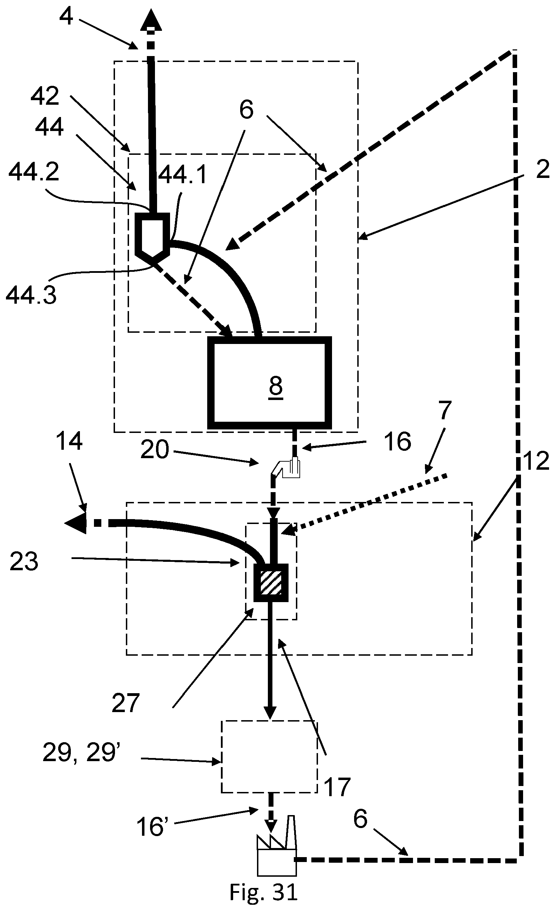

The embodiment in Fig 31 illustrates an alternative calcium looping process in which a sorbent, namely decarbonated materials/particles (e.g. quick lime) is contacted with CO₂-containing gas and is then converted in carbonated materials/particles 6 (e.g. calcium carbonates). The embodiment in Fig. 31 does not show a third circuit 12' for sake of simplicity, but such a circuit can be integrated. The formed carbonated materials/particles 6 (e.g. calcium carbonate) are then sent sequentially to a calciner (i.e. the first circuit 2) and a hydration section 23, and a dehydrating section 29, 29' in order to regenerate the sorbent 16', while at the same time producing a concentrated stream of CO₂.

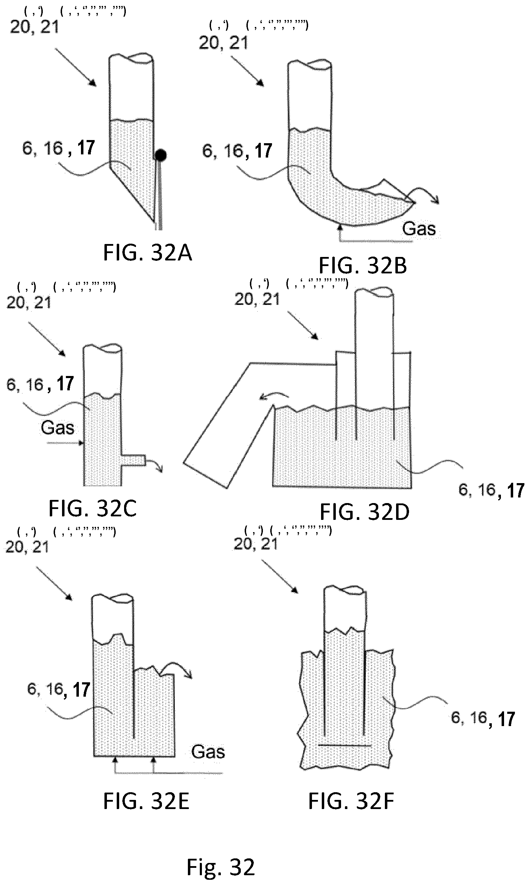

The selective separation means 20, 20, 20', 20", 20‴, 21, 21' connecting the first 2 and second circuits 12, second 12 and third circuit 12' or first and third circuit 12' are arranged so as to allow the transfer of either the particles of carbonated materials 6, the decarbonated particles 16 or hydrated particles 17 of said materials between the respective circuits while substantially preventing the passage of gases thereof. The selective separation means 20, 20, 20', 20", 20"', 21, 21' is in particular a siphon element, a loop seal (see Fig. 32D), single or multiple flaps, table feeder, cellular wheel sluice, fluid seal-pot (see Fig. 32E), "Dollar" plate (see Fig. 32F), or any of the following valves: rotary valves, cone valve, J valve (see Fig. 32B), L valve (see Fig. 32C), trickle valve (see Fig. 32A) and flapper valve.

Since the interfaces between the calcination (first circuit 2) and the second circuit 12 are very hot, this invention prioritizes the utilization of a non-mechanical sealing device (selective separation means 20, 21) with no moving part, such as a siphon element, a loop seal (see Fig. 32D), fluid seal-pot (see Fig. 32E), "Dollar" plate (see Fig. 32F), cone valve, J valve (see Fig. 32B) or L valve (see Fig. 32C). When a fluidising or aeration gas is needed to help the solid movement in the non-mechanical sealing device, steam is a preferred option as aeration gas. Alternatively, hydration is thermodynamically possible in the sealing device air, or O₂ can be used for such aeration purposes. In this way of separation, the fine carbonated material 6, intermediated 16, 17 or final product 16 or 17 provides a plugged seal keeping the gas streams reliably separated while preferring to avoid the use of a less reliable mechanical device in such very hot conditions. Pressure in the two circuits 2, 12, and optionally in the third circuit 12' in the vicinity of the sealing devices can be equalized by adding a tail fan (if necessary) to the second 12 and/or third 12' circuit and/or by creating pressure drop with a throttle valve (e.g. louver, damper) in the calcination circuit to minimize the Δp across the seal. This helps to avoid CO₂ leaking into the second circuit 12 or N₂ leaking into the calcination circuit 2.

By limestone, dolomite or other carbonated materials (also known as carbonate materials) is meant materials fitting the formula:
aCaCO₃.bMgCO₃.cCaMg(CO₃)₂.xCaO.yMgO.zCa(OH)₂.tMg(OH)₂.ul, wherein I are impurities; x, y, z, t and u each being mass fractions ≥ 0 and ≤ 90%, a, b and c each being mass fractions ≥ 0 and ≤ 100%, with a + b + c ≥ 10% by weight, based on the total weight of said materials, preferably x, y, z, t and u each being mass fractions ≥ 0 and ≤ 50%, a, b and c each being mass fractions ≥ 0 and ≤ 100%, with a + b + c ≥ 50% by weight, based on the total weight of said materials; preferably the particles of the carbonated minerals having a d90 less than 10 mm, preferably less than 6 mm, more preferably less than 4 mm.

By decarbonated materials is meant materials fitting the formula aCaCOₐ.bMgCOₐ.cCaMg(CO₃)_{z}.xCaO.yMgO.zCa(OH)₂.tMg(OH)₂.ul,
wherein I are impurities; a, b, c, z, t and u each being mass fractions ≥ 0 and ≤ 50%, x and y each being mass fractions ≥ 0 and ≤ 100%, with x + y ≥ 50% by weight, based on the total weight of said materials;

By hydrated materials is meant materials fitting the formula aCaCO₃.bMgCO₃.cCaMg(CO₃)₂. xCaO.yMgO.zCa(OH)₂.tMg(OH)₂.ul,
wherein I are impurities; a, b, c, and u each being mass fractions ≥ 0 and ≤ 50%, z and t each being mass fractions ≥ 0 and ≤ 100%, with z + t ≥ 10% by weight, preferably z + t ≥ 50% by weight, x and y each being mass fractions ≥ 0 and ≤ 100%, with x + y ≤90% by weight, based on the total weight of said materials;
By *"gas composition being substantially free of nitrogen"* is meant that the amount of nitrogen represents less than 10% vol., more preferably less than 5%, in particular less than 1% in volume (i.e. vol.) of the this gas composition.

*By "substantially free of carbon dioxide"* we understand that the amount of carbon dioxide represents less than 10% vol., more preferably less than 5%, in particular less than 1% in volume (i.e. vol.) of the this gas composition.

By "a dioxygen enriched composition" we understand that the amount of O₂ represents at least 70% vol. of the this gas composition.

By "pure dioxygen" we understand that the amount of O₂ represents at least 90% vol. of the this gas composition.

The calcination in the reactor 8, 82, in particular the externally-fired calciner 84 can be a flash calcination.

The heat released in the condenser 50 (e.g. see embodiments according to Fig. 16, 17, 18) can be reused, for instance to heat the carbonated materials 6 before they are fed to the first circuit 2 (this option is not shown).

Although the present invention has been described and illustrated in details, it is understood that the same is by way of illustration and example only and is not to be taken by way of limitation, the scope of the present invention being limited only by the terms of the appended claims.

## Claims

1. Process for decarbonation of limestone, dolomite or other carbonated materials and hydration of said decarbonated limestone, dolomite or other carbonated materials, said process comprising the following steps:
- heating particles of carbonated materials (6) in a reactor (8) of a first circuit (2) up to a temperature range in which carbon dioxide of the carbonated materials is released to obtain decarbonated particles (16) comprising CaO and/or MgO;
- conveying said particles of carbonated materials (6) by a first entraining gas (4) in the first circuit (2) for preheating said carbonated materials (6), said gas (4) comprising the released carbon dioxide, said gas composition being substantially free of nitrogen;
- separating, in particular inertially separating, the carbonated particles (6) from a first entraining gas (4) flow ;
- transferring the decarbonated particles (16) to a second circuit (12), in which a second gas (14) circulates, said circuit (12) comprising a hydration section (23);
- hydrating the decarbonated particles (16) in contact with water (7) as liquid and/or steam, and optionally in the presence of a dilution gas, such as air or a dioxygen enriched composition, in particular pure dioxygen, in the hydration section (23) to obtain hydrated particles (17) comprising Ca(OH)₂ and/or Mg(OH)₂;
- transferring at least a portion of the heat generated by the hydration of the decarbonated particles (16) to the second gas (14);
- at least one of:
i. discharging the second gas (14) to the atmosphere at an outlet of the second circuit (12),
ii. supplying the reactor (8) with the second gas (14), and/or
iii. supplying with the second gas (14) at least one heat recovery element in which the heat of the second gas (14) is used for:
- preheating and drying at least carbonated materials, in particular carbonated particles (6) and/or fuel,
- drying hydrated products, in particular the hydrated particles (17),
- providing an heat source for a gas treatment process, in particular an amine gas treating apparatus, a thermal swing adsorption apparatus, a cryogenic refrigeration apparatus, a CO2 conversion reaction,
- generating mechanical work and/or
- generating electricity.

2. Process according to Claim 1, wherein a portion of the heat generated by at least the hydration of the decarbonated particles (16), the sensible heat of the decarbonated particles (16) and/or the sensible heat of the hydrated particles (17) are transferred to a third gas (14') substantially free of carbon dioxide circulating in a third circuit (12'), in particular via a heat exchanger and/or via contacting the hydrated particles (17) and/or decarbonated particles (16) with the third gas (14').

3. Process according to Claim 1 or 2, further comprising cooling the decarbonated particles (16) before the hydration step in a cooling section (22, 22") of the second circuit (12) or the third circuit (12'), in which the decarbonated particles (16) release a portion of their thermal energy, thereby heating the second gas (14) or the third gas (14') and ensuring a cooling of said decarbonated particles (16);

4. Process according to the previous claim, wherein the step of transferring the decarbonated particles (16) to a second circuit (12) comprises transferring the decarbonated particles (16) to the cooling section (22) of the second circuit (12) preferably via a first selective separation means (20) arranged between the first (2) and second circuit (12), said separation means (20) allowing the passage of solids while substantially preventing the passage of the gases (4, 14), wherein the cooling section (22) of the second circuit (12) is positioned downstream from the hydration section (23), further comprising the steps of:
- separating, in particular inertially separating, the decarbonated particles (16) conveyed by a second gas (14) flow in the cooling section (22) of the second circuit (12);
- transferring the decarbonated separated particles (16) from said cooling section (22) to the hydration section (23).

5. Process according to the Claim 3, further comprising the steps of:
- transferring the decarbonated particles (16) to the cooling section (22") of the third circuit (12'), preferably via a first selective separation means (20) arranged between the first (2) and third circuit (12'), said separation means (20) allowing the passage of solids while substantially preventing the passage of the gases (4, 14');
- separating, in particular inertially separating, the decarbonated particles (16) conveyed by a third gas (14') flow in the cooling section (22") of the third circuit (12');
- transferring the decarbonated particles (16) separated from said cooling section (22") to the hydration section (23), preferably via a first selective separation means (20') arranged between the second (12) and third circuits (12'), said separation means (20') allowing the passage of solids while substantially preventing the passage of the gases (14, 14').

6. Process according to Claim 4 or 5, wherein the transferring the decarbonated particles (16) separated from said cooling section (22; 22") of the second (12) or third (12') circuit to the hydration section (23) further comprises the steps of:
- transferring the decarbonated particles (16) separated from the cooling section (22; 22") of the second (12) or third (12') circuit to an additional cooling section (22*; 22**) in the second (12) or third circuit (12') in which the decarbonated particles (16) release a portion of their thermal energy, respectively;
- separating the decarbonated particles (16) cooled in the previous step from the second (14) or third gas (14') flow, wherein the additional cooling section (22* ;22**) is arranged upstream from the cooling section (22'; 22") of the second (12) or third circuit (12'), respectively;
- transferring the decarbonated separated particles (16) from said additional cooling section (22*, 22** ) to the hydration section (23), in particular via the first selective separation means (20') arranged between the second (12) and third circuits (12'), said separation means (20') allowing the passage of solids while substantially preventing the passage of the gases (14, 14').

7. Process according to Claim 4 or 6 in combination with Claim 4, wherein the transferring the decarbonated particles (16) separated from the cooling section (22) or the additional cooling section (22*) of the second circuit (12) to the hydration section (23) comprises the steps of:
- transferring the decarbonated particles (16) separated from the cooling section (22) or the additional cooling section (22*) of the second circuit (12) to the cooling section (22") of the third circuit (12') comprising the third gas (14') in which the conveyed decarbonated particles (16) release a portion of their thermal energy, in particular via a first selective separation means (20') arranged between the second (12) and third circuits (12'), said separation means (20') allowing the passage of solids while substantially preventing the passage of the gases (14, 14');
- separating the decarbonated particles (16) from a third gas (14') flow;
- transferring the decarbonated particles (16) separated from the third gas (14') flow to the hydration section (23), in particular via a second selective separation means (20") arranged between the second (12) and third circuits (12'), said separation means (20") allowing the passage of solids while substantially preventing the passage of the gases (14, 14').

8. Process according to Claim 5 or 6 in combination with Claim 5, wherein the transferring the decarbonated particles (16) separated from the cooling section (22") or the additional cooling section (22**) of the third circuit (12') to the hydration section (23) comprises the steps of:
- transferring the decarbonated particles (16) separated from the cooling section (22") or the additional cooling section (22**) of the third circuit (12') to the cooling section (22) of the second circuit (12) comprising the second gas (14) in which the conveyed decarbonated particles (16) release a portion of their thermal energy, in particular via the first selective separation means (20') arranged between the second (12) and third circuits (12'), said separation means (20") allowing the passage of solids while substantially preventing the passage of the gases (14, 14');
- separating the decarbonated particles (16) from a second gas (14) flow;
- transferring the decarbonated particles (16) separated from the second gas (14) flow to the hydration section (23).

9. Process according to Claim 5, Claim 6 in combination with Claim 4, or Claim 8 further comprising the steps of:
- transferring the hydrated particles (17) to a further cooling section (22'; 22‴) of the third circuit (12') in which the hydrated particles (17) release a portion of their thermal energy, preferably via a third selective separation means (20‴) arranged between the second (12) and third circuits (12'), said separation means (20‴) allowing the passage of solids while substantially preventing the passage of the gases (14, 14');
- separating the hydrated particles (17) cooled in the previous step from the third gas (14') flow, wherein the further cooling section (22‴) is arranged upstream from the cooling section (22") of the third circuit (12').

10. Process according to Claim 4, Claim 6 in combination with Claim 5, or Claim 8, further comprising the steps of:
- transferring the hydrated particles (17) to a further cooling section (22') in the second (12) circuit in which the hydrated particles (17) release a portion of their thermal energy;
- separating the hydrated particles (17) cooled in the previous step from the second (14) flow, wherein the further cooling section (22') is arranged upstream from the cooling section (22) of the second (12) circuit.

11. Process according to any of the previous claims, further comprising the steps of
- Feeding the hydration section (23) with
- the decarbonated particles (16),
- liquid water (7) and/or water steam (7), and
- optionally the diluting gas;
- Extracting a gas comprising hot air, water steam, fuel, or a dioxygen enriched composition, or any mixture thereof from said hydration section (23), said gas comprising at least a portion of the heat generated by the hydration of the decarbonated particles (16);
- Supplying the second circuit (12) with said gas.

12. Process according to any of the previous claims, wherein the step of transferring at least a portion of the heat generated by the hydration of the decarbonated particles (16) to the second gas (14) comprises transferring at least a portion of the heat generated by the hydration of the decarbonated particles (16) to the second gas (14) via at least one heat exchanger.

13. Process according to any of the preceding claims, further comprising the step of introducing the particles of carbonated materials (6) in a heating section (32) of the second circuit (12), in which the heating section (32) is positioned downstream of the hydration section (23), so that the heat extracted from the hydration section (23), the decarbonated particles (16), and optionally the hydrated particles (17), in particular to the second gas (14), is used to heat the particles of carbonated materials (6) by means of a solid-gas heat exchange (34), the heated carbonated particles (6) being subsequently separated from the second gas flow (14) and transferred to the reactor (8) or upstream of a pre-heating section (42) of the first circuit (2), preferably via a second selective separation means (21) arranged between the first (2) circuit and the second (12) circuit, allowing the passage of solids while substantially preventing the passage of the gases (4, 14).

14. Process according to Claim 2 in combination with any of Claims 3 to 13, further comprising the step of introducing the particles of carbonated materials (6) in a heating section (32') of the third circuit (12'), in which the heating section (32') is positioned downstream of the cooling section (22"), so that heat extracted from the decarbonated particles (16) and optionally the hydrated particles (17) and/or heat extracted from the hydration section (23), in particular to the third gas (14'), is used to heat the particles of carbonated materials (6) by means of a solid-gas heat exchange (34'), the heated carbonated particles (6) being subsequently separated from the third gas (14') flow and transferred to the reactor (8) or upstream of the pre-heating section (42) of the first circuit (2), preferably via a second selective separation means (21') arranged between the first (2) circuit and the third (12') circuit, allowing the passage of solids while substantially preventing the passage of the gases (4,14').

15. Process according to any of the previous claims, further comprising the step of feeding the second circuit (12) and/or the third circuit (12') with air and/or an dioxygen enriched composition, in particular pure dioxygen, and optionally fuel.

16. Process according to any of the previous claims, further comprising at least one the steps of :
- discharging the third gas (14') to the atmosphere at an outlet of the third circuit (12');
- supplying the reactor (8) with the third gas (14') and optionally flue gas (14") produced in an externally-fired calciner (84) of the reactor (8); and/or
- supplying with the third gas (14') at least one heat recovery element in which the heat of the third gas (14') is used for:
- preheating and drying at least carbonated material and/or fuel;
- drying hydrated lime product;
- providing heat source for a gas treatment process, in particular an amine gas treating apparatus, a thermal swing adsorption apparatus, a cryogenic refrigeration apparatus, a CO2 conversion reaction;
- generating mechanical work; and/or
- generating electricity;

17. Process according to any of the previous claims, further comprising maintaining pressure in at least the hydration section (23), the cooling section (22) and/or the further cooling section (22') of the second circuit (12) above the atmospheric pressure between 1 and 20 bars above atmospheric pressure, and/or the temperature in at least the hydration section (23), the cooling section (22) and/or the further cooling section (22') of the second circuit (12) below the temperature at which de-hydration occurs such as T[°K] < 11607 / (14,6484 - In(PH20[bar])).

18. Device for the decarbonation of limestone, dolomite or other carbonated materials and hydration of said decarbonated limestone, dolomite or other carbonated materials, for carrying out the process according to any of the preceding claims 1 to 17 comprising:
- a first circuit (2) in which a first entraining gas (4) substantially free of nitrogen conveys particles (6) of said carbonated mineral, said first circuit comprising a reactor (8) in which said particles (6) are heated to a temperature range in which carbon dioxide is released to obtain decarbonated particles comprising CaO and/or MgO;
- a second circuit (12) in which a second gas (14) substantially free of carbon dioxide is circulated, the second circuit (12) comprising a hydration section (23) in which the decarbonated particles (16) transferred from the first circuit (2) are in contact with water (7) as liquid and/or steam and optionally a diluting gas, wherein the second circuit (12) comprises at least one of: a free outlet end for discharging the second gas (12) to the atmosphere, an outlet end connected to the reactor (8) to supply the reactor (8) with the second gas (12) and/or an outlet end connected to at least one heat recovery element recovering the heat of the second gas (12), preferably said element being selected in the group comprising: a fuel dryer, a hydrate dryer, a steam generator for generating mechanical work and/or electricity in a turbine and a CO₂ treatment process such as an amine gas treating apparatus, a thermal swing adsorption apparatus or a cryogenic refrigeration apparatus.

19. Device according to Claim 18, wherein the second circuit (12) comprises a cooling section (22) positioned downstream from the hydration section (23) of the second circuit (2) and optionally a further cooling section upstream from the hydration section (23), preferably the cooling section (22) and optionally the further cooling section comprising a solid/gas suspension heat exchanger (24, 24'), respectively.

20. Device according to Claim 18 or 19, wherein a first selective separation means, in particular a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve (20) connecting the first (2) and the second circuit (12) allowing the transfer of the decarbonated particles (16) from the first circuit (2) to the second circuit (12) while substantially preventing the passage of gases (4, 14), preferably the first selective separation means (20) being connected upstream of an inlet (24.1) of the suspension heat exchanger (24) of the cooling section (22) of the second circuit (12).

21. Device according to any of Claims 18 to 20, wherein the hydrating section (23) comprises a fluidized bed reactor (25) such as a circulating fluidized bed, an entrained bed or a bubbling bed or a slaker such as a paddle mixer (25').

22. Device according to any of Claims 18 to 21, further comprising a third circuit (12') in which the third gas (14') substantially free of carbon dioxide is circulated, said third circuit comprising a cooling section (22") in which the decarbonated particles (16) transferred from the first (2) or second (12) circuit release a portion of their thermal energy to the third gas (14'), preferably said cooling section (22") comprising a solid/gas suspension heat exchanger (24").

23. Device according to the previous claim, further comprising a first selective separation means (20') connecting the second (12) and the third circuit (12') allowing the transfer of the decarbonated particles (16) between the second circuit (12) and the third circuit (12') while substantially preventing the passage of gases (14, 14'), preferably the first selective separation means (20') being connected to a return passage (24.3) for collecting the separated decarbonated particles (16) of the suspension heat exchanger (24) of the cooling section (22) of the second (12) circuit and upstream of an inlet (24.1") of the suspension heat exchanger (24", 24) of the cooling section (22") of the third (12') circuit, and/or a first selective separation means (20) connecting the first (2) and the third circuit (12") allowing the transfer of the decarbonated particles (16) between the first circuit (2) and the third circuit (12') while substantially preventing the passage of gases (4, 14'), preferably the first selective separation means (20) being connected upstream of an inlet of the suspension heat exchanger (24) of the cooling section (22") of the third circuit (12').

24. Device according to the previous claim, wherein the third circuit (12') comprises a further cooling section (22‴) positioned upstream from the cooling section (22") of the third circuit (12'), preferably said further cooling section (22‴) comprising a solid/gas suspension heat exchanger (24‴).

25. Device according to Claim 23 or 24, wherein a second selective separation means (20") connecting the third (12') and the second circuit (12) allowing the transfer of the decarbonated particles (16) between the third circuit (12') and the second circuit (12) while substantially preventing the passage of gases (14, 14'), preferably the second selective separation means (20") being connected to a return passage (24.3"; 24.3) for collecting the separated decarbonated particles (16) of the suspension heat exchanger (24"; 24) of the cooling section of the third (14') circuit and to an inlet of the hydration section (23).

26. Device according to the previous claim, wherein a third selective separation means (20‴) connecting the second (12) and the third circuit (12') allowing the transfer of the hydrated particles (17) from the second circuit (12) to the third circuit (12') while substantially preventing the passage of gases (14, 14'), preferably the third selective separation means (20‴) being connected to an outlet of the hydration section (23) and upstream of an inlet (24.1‴) of the suspension heat exchanger (24‴) of the further cooling section (22‴) of the third circuit (14').

27. Device according to any of Claims 18 to 26, wherein the first circuit (2) comprises a pre-heating section (42), said pre-heating section comprising a solid/gas suspension heat exchanger (44).

28. Device according to any of Claims 18 to 27, wherein the second circuit (12) comprises a heating section (32) positioned downstream from the cooling section (22) of the second circuit (12), preferably said heating section (32) comprising a solid/gas suspension heat exchanger (34).

29. Device according to the previous claim, wherein a second selective separation means (21) connecting the first (2) and the second circuit (12) allowing the transfer of the carbonated particles (6) from the second circuit (12) to the first circuit (2) while substantially preventing the passage of gases (4, 14), preferably the second selective separation means (21) being connected to a return passage (34.3) for collecting the separated carbonated particles (6) of the solid/gas suspension heat exchanger (34) of the heating section (32) of the second circuit (12) and to the reactor (8) or upstream of the solid/gas suspension heat exchanger (44) of the pre-heating section (32) of the first circuit (2), more preferably the second selective separation means (21) connecting the first (2) and second (12) circuit being arranged so as to allow the transfer of the carbonated particles (6) between the second circuit and the first circuit while substantially preventing the passage of gases (4, 14), in particular a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve.

30. Device according to any of Claims 22 to 26, in particular in combination with any of Claims 27 to 29, wherein the third circuit (12') comprises a heating section (32') positioned downstream from the cooling section (22") of the third circuit (12'), preferably said heating section (32') comprising a solid/gas suspension heat exchanger (34').

31. Device according to the previous claim, wherein a second selective separation means (21') connecting the first (2) and the third circuit (12') allowing the transfer of the carbonated particles (6) from the third circuit (12') to the first circuit (2) while substantially preventing the passage of gases (4, 14'), preferably the second selective separation means (21') being connected to a return passage (34.3') for collecting the separated carbonated particles (6) of the solid/gas suspension heat exchanger (34') of the third circuit (12') and to the reactor (8) or upstream of the solid/gas suspension heat exchanger (44) of the pre-heating section (32) of the first circuit (2) ), more preferably the second selective separation means (21') connecting the first (2) and third (12') circuit being arranged so as to allow the transfer of the carbonated particles (6) between the third circuit (12') and the first circuit (2) while substantially preventing the passage of gases (4, 14'), in particular a siphon element, a loop seal, single or multiple flaps, table feeder, cellular wheel sluice, fluid seal-pot, "Dollar" plate, or any of the following valves: rotary valves, cone valve, J valve, L valve, trickle valve and flapper valve.

32. Device according to any of Claims 18 to 31, wherein the reactor (8) comprises an externally-fired calciner (84), said externally-fired calciner (84) comprising an exhaust passage (100), said passage (100) being connected to the second circuit (12), preferably upstream of the heating section (32).

33. Device according to any of Claims 18 to 32, wherein the solid/gas suspension heat exchanger (44) of the first circuit (2) comprises at least one inertial separator, in particular a cyclone.

34. Device according to any of Claims 18 to 33, wherein the solid/gas suspension heat exchanger(s) (24, 24', 24", 24‴, 24ʺʺ) of the at least one of the second (12) and/or third (12') circuit and/or the solid/gas suspension heat exchanger (34; 34') of the heating section (32, 32') of at least one of the second (12) and third (12') circuit each comprise at least one inertial separator, preferably a cyclone.

35. Device according to any of Claims 18 to 34, comprising a condenser (50) to separate at least one constituent, in particular water from the first gas (4), said condenser (50) being positioned in the first circuit (2) downstream of the reactor (8).

36. Device according to any of Claims 18 to 35, wherein the first circuit (2) comprises a recycling passage (90) for recycling at least a portion of the first gas (4) from a position downstream from the pre-heating section (32) or the condenser (50) to a position upstream of the reactor (8).

37. Device according to any of Claims 18 to 36, wherein the second circuit (12) and/or third circuit comprise a heat-recovery element (60), preferably said heat-recovery element being configured to exchange the heat accumulated in the second (14) and/or third (14') gas to the first gas (4) at a section of the first circuit (2), more preferably said heat-recovery system (60) being a heat exchanger (60) positioned between the first (2) circuit and the second (12) and/or third (12') circuit.

38. Device according to any of Claims 18 to 37, wherein the reactor (8) comprises at least one of the following elements: electric heater, oxy-burner, an indirect calciner such as solid heat-carrier reactor, an externally-fired calciner (84), or electrically-heated calciner, or a combination thereof.

39. Device according to any of Claims 18 to 38, wherein the reactor (8) comprises a fluidized bed reactor, an entraining bed reactor, a circulated fluidized bed or any combination thereof.

40. Device according to the previous claim, wherein the externally-fired calciner (84) comprises an intake passage (110), said passage (110) being connected to the second circuit (12), preferably downstream from the heating section (32).

41. Device according to any of Claims 18 to 39, wherein the third circuit comprises a further heat-recovery element, in particular in the list comprising: a fuel dryer, a hydrate dryer, a steam generator for generating mechanical work and/or electricity in a turbine, a CO2 treatment process such as an amine gas treating apparatus, a thermal swing adsorption apparatus or a cryogenic refrigeration apparatus.

## Patentansprüche

1. Verfahren zur Dekarbonisierung von Kalkstein, Dolomit oder anderen karbonisierten Materialien und Hydratisierung des besagten dekarbonisierten Kalksteins, Dolomits oder anderer karbonisierter Materialien, besagtes Verfahren umfassend die folgenden Schritte:
- Erhitzen von Partikeln aus karbonisierten Materialien (6) in einem Reaktor (8) eines ersten Kreislaufs (2) bis zu einem Temperaturabschnitt, in dem Kohlendioxid der karbonisierten Materialien abgegeben wird, um dekarbonisierte Partikel (16), umfassend CaO und/oder MgO, zu erlangen;
- Befördern der besagten Partikel aus karbonisierten Materialien (6) durch ein erstes Mitnahmegas (4) in dem ersten Kreislauf (2) zum Vorheizen der besagten karbonisierten Materialien (6), das besagte Gas (4) umfassend das abgegebene Kohlendioxid, wobei die besagte Gaszusammensetzung im Wesentlichen frei von Stickstoff ist;
- Trennen, insbesondere Trennen durch Trägheit, der karbonisierten Partikel (6) von einem Strom des ersten Mitnahmegases (4);
- Überführen der dekarbonisierten Partikel (16) an einen zweiten Kreislauf (12), in dem ein zweites Gas (14) zirkuliert, besagter Kreislauf (12) umfassend einen Hydratisierungsabschnitt (23);
- Hydratisieren der dekarbonisierten Partikel (16) in Kontakt mit Wasser (7) als Flüssigkeit und/oder Dampf und optional in Anwesenheit eines Verdünnungsgases, wie beispielsweise Luft oder einer mit Sauerstoff angereicherten Zusammensetzung, insbesondere reinem Sauerstoff, in dem Hydratisierungsabschnitt (23), um hydratisierte Partikel (17), umfassend Ca(OH)₂ und/oder Mg(OH)₂, zu erlangen;
- Überführen mindestens eines Teils der Wärme, die durch die Hydratisierung der dekarbonisierten Partikel (16) erzeugt wird, an das zweite Gas (14);
- mindestens eines von Folgenden:
i. Ablassen des zweiten Gases (14) in die Atmosphäre an einem Auslass des zweiten Kreislaufs (12),
ii. Zuführen des zweiten Gases (14) zu dem Reaktor (8), und/oder
iii. Zuführen des zweiten Gases (14) zu mindestens einem Wärmerückgewinnungselement, in dem die Wärme des zweiten Gases (14) zu Folgendem verwendet wird:
- Vorheizen und Trocknen von zumindest karbonisierten Materialien, insbesondere karbonisierter Partikel (6) und/oder Brennstoff;
- Trocknen von hydratisierten Produkten, insbesondere der hydratisierten Partikel (17);
- Bereitstellen einer Wärmequelle für ein Gasbehandlungsverfahren, insbesondere für eine Amin-Gasbehandlungsanlage, eine Thermo-Swing-Adsorptionsanlage, eine kryogene Kühlanlage, eine CO2-Umwandlungsreaktion;
- Erzeugen mechanischer Arbeit; und/oder
- Erzeugen von Strom.

2. Verfahren nach Anspruch 1, wobei ein Teil der Wärme, die durch mindestens die Hydratisierung der dekarbonisierten Partikel (16) erzeugt wird, die fühlbare Wärme der dekarbonisierten Partikel (16) und/oder die fühlbare Wärme der hydratisierten Partikel (17) auf ein drittes Gas (14'), das im Wesentlichen frei von Kohlendioxid ist und in einem dritten Kreislauf (12') zirkuliert, überführt wird, insbesondere über einen Wärmetauscher und/oder durch Inkontaktbringen der hydratisierten Partikel (17) und/oder der dekarbonisierten Partikel (16) mit dem dritten Gas (14').

3. Verfahren nach Anspruch 1 oder 2, wobei die dekarbonisierten Partikel (16) vor dem Hydratisierungsschritt in einem Kühlabschnitt (22, 22") des zweiten Kreislaufs (12) oder des dritten Kreislaufs (12') gekühlt werden, in dem die dekarbonisierten Partikel (16) einen Teil ihrer Wärmeenergie abgeben, wodurch das zweite Gas (14) oder das dritte Gas (14') erwärmt und eine Abkühlung der besagten dekarbonisierten Partikel (16) gewährleistet wird;

4. Verfahren nach dem vorherigen Anspruch, wobei der Schritt eines Überführens der dekarbonisierten Partikel (16) in einen zweiten Kreislauf (12) ein Überführen der dekarbonisierten Partikel (16) in den Kühlabschnitt (22) des zweiten Kreislaufs (12) vorzugsweise über eine erste selektive Trenneinrichtung (20), die zwischen dem ersten (2) und dem zweiten Kreislauf (12) angeordnet ist, umfasst, wobei die besagte Trenneinrichtung (20) den Durchgang von Feststoffen zulässt, während sie den Durchgang der Gase (4, 14) im Wesentlichen verhindert, wobei der Kühlabschnitt (22) des zweiten Kreislaufs (12) stromabwärts von dem Hydratisierungsabschnitt (23) positioniert ist, ferner umfassend die folgenden Schritte:
- Trennen der dekarbonisierten Partikel (16), die von einem zweiten Gasstrom (14) in der Kühlabschnitt (22) des zweiten Kreislaufs (12) befördert werden, insbesondere Trennen durch Trägheit;
- Überführen der dekarbonisierten, abgetrennten Partikel (16) aus dem besagten Kühlabschnitt (22) in den Hydratisierungsabschnitt (23).

5. Verfahren nach Anspruch 3, ferner umfassend die folgenden Schritte:
- Überführen der dekarbonisierten Partikel (16) an den Kühlabschnitt (22") des dritten Kreislaufs (12'), vorzugsweise über eine erste selektive Trenneinrichtung (20), die zwischen dem ersten (2) und dritten Kreislauf (12') angeordnet ist, wobei die besagte Trenneinrichtung (20) den Durchgang von Feststoffen zulässt, während sie den Durchgang von Gasen (4, 14') im Wesentlichen verhindert;
- Trennen der dekarbonisierten Partikel (16), die von einem dritten Gasstrom (14') in der Kühlabschnitt (22") des dritten Kreislaufs (12') befördert werden, insbesondere Trennen durch Trägheit;
- Überführen der aus dem besagten Kühlabschnitt (22") abgetrennten dekarbonisierten Partikel (16) in den Hydratisierungsabschnitt (23), vorzugsweise über eine erste selektive Trenneinrichtung (20'), die zwischen dem zweiten (12) und dritten Kreislauf (12') angeordnet ist, wobei die besagte Trenneinrichtung (20') den Durchgang von Feststoffen zulässt, während sie den Durchgang von Gasen (14, 14') im Wesentlichen verhindert.

6. Verfahren nach Anspruch 4 oder 5, wobei das Überführen der dekarbonisierten Partikel (16), die von dem besagten Kühlabschnitt (22; 22") des zweiten (12) oder dritten (12') Kreislaufs abgetrennt werden, in den Hydratisierungsabschnitt (23) ferner die folgenden Schritte umfasst:
- Überführen der von dem Kühlabschnitt (22; 22") des zweiten (12) oder dritten (12') Kreislaufs abgetrennten dekarbonisierten Partikel (16) in einen zusätzlichen Kühlabschnitt (22*; 22**) jeweils in dem zweiten (12) und dritten Kreislauf (12'), in dem die dekarbonisierten Partikel (16) einen Teil ihrer Wärmeenergie abgeben;
- Trennen der in dem vorherigen Schritt gekühlten dekarbonisierten Partikel (16) von dem zweiten (14) oder dem dritten Gasstrom (14'), wobei der zusätzliche Kühlabschnitt (22*; 22**) stromaufwärts vom Kühlabschnitt (22'; 22") des zweiten (12) bzw. dritten Kreislaufs (12') angeordnet ist;
- Überführen der dekarbonisierten abgetrennten Partikel (16) aus dem besagten zusätzlichen Kühlabschnitt (22*, 22**) in den Hydratisierungsabschnitt (23), insbesondere über die erste selektive Trenneinrichtung (20'), die zwischen dem zweiten (12) und dem dritten Kreislauf (12') angeordnet ist, wobei die besagte Trenneinrichtung (20') den Durchgang von Feststoffen zulässt, während sie den Durchgang von Gasen (14, 14') im Wesentlichen verhindert.

7. Verfahren nach Anspruch 4 oder 6 in Kombination mit Anspruch 4, wobei das Überführen der aus dem Kühlabschnitt (22) oder dem zusätzlichen Kühlabschnitt (22*) des zweiten Kreislaufs (12) abgetrennten dekarbonisierten Partikel (16) in den Hydratisierungsabschnitt (23) die folgenden Schritte umfasst:
- Überführen der von dem Kühlabschnitt (22) oder dem zusätzlichen Kühlabschnitt (22*) des zweiten Kreislaufs (12) abgetrennten dekarbonisierten Partikel (16) in den Kühlabschnitt (22") des dritten Kreislaufs (12') mit dem dritten Gas (14'), in dem die beförderten dekarbonisierten Partikel (16) einen Teil ihrer Wärmeenergie abgeben, insbesondere über eine erste selektive Trenneinrichtung (20'), die zwischen dem zweiten (12) und dem dritten Kreislauf (12') angeordnet ist, wobei die besagte Trenneinrichtung (20') den Durchgang von Feststoffen zulässt, während sie den Durchgang von Gasen (14, 14') im Wesentlichen verhindert;
- Trennen der dekarbonisierten Partikel (16) von dem Strom eines dritten Gases (14');
- Überführen der von dem Strom des dritten Gases (14') abgetrennten dekarbonisierten Partikel (16) in den Hydratisierungsabschnitt (23), insbesondere über eine zweite selektive Trenneinrichtung (20"), die zwischen dem zweiten (12) und dem dritten Kreislauf (12') angeordnet ist, wobei die besagte Trenneinrichtung (20") den Durchgang von Feststoffen zulässt, während sie den Durchgang von Gasen (14, 14') im Wesentlichen verhindert.

8. Verfahren nach Anspruch 5 oder 6 in Kombination mit Anspruch 5, wobei das Überführen der aus dem Kühlabschnitt (22") oder dem zusätzlichen Kühlabschnitt (22**) des dritten Kreislaufs (12') abgetrennten dekarbonisierten Partikel (16) in den Hydratisierungsabschnitt (23) die folgenden Schritte umfasst:
- Überführen der von dem Kühlabschnitt (22") oder dem zusätzlichen Kühlabschnitt (22**) des dritten Kreislaufs (12') abgetrennten dekarbonisierten Partikel (16) in den Kühlabschnitt (22) des zweiten Kreislaufs (12) mit dem zweiten Gas (14), in dem die beförderten dekarbonisierten Partikel (16) einen Teil ihrer Wärmeenergie abgeben, insbesondere über die zwischen dem zweiten (12) und dem dritten Kreislauf (12') angeordnete erste selektive Trenneinrichtung (20'), wobei die besagte Trenneinrichtung (20") den Durchgang von Feststoffen zulässt, während sie den Durchgang von Gasen (14, 14') im Wesentlichen verhindert;
- Trennen der dekarbonisierten Partikel (16) von dem Strom des zweiten Gases (14);
- Überführen der von dem zweiten Gasstrom (14) abgetrennten dekarbonisierten Partikel (16) an den Hydratisierungsabschnitt (23).

9. Verfahren nach Anspruch 5, Anspruch 6 in Kombination mit Anspruch 4 oder Anspruch 8, ferner umfassend die folgenden Schritte:
- Überführen der hydratisierten Partikel (17) in einen weiteren Kühlabschnitt (22'; 22‴) des dritten Kreislaufs (12'), in dem die hydratisierten Partikel (17) einen Teil ihrer Wärmeenergie abgeben, vorzugsweise über eine dritte selektive Trenneinrichtung (20‴), die zwischen dem zweiten (12) und dem dritten Kreislauf (12') angeordnet ist, wobei die besagte Trenneinrichtung (20‴) den Durchgang von Feststoffen zulässt, während sie den Durchgang von Gasen (14, 14') im Wesentlichen verhindert;
- Trennen der in dem vorherigen Schritt gekühlten hydratisierten Partikel (17) aus dem Strom des dritten Gases (14'), wobei der weitere Kühlabschnitt (22"') stromaufwärts von dem Kühlabschnitt (22") des dritten Kreislaufs (12') angeordnet ist.

10. Verfahren nach Anspruch 4, Anspruch 6 in Kombination mit Anspruch 5 oder Anspruch 8, ferner umfassend die folgenden Schritte:
- Überführen der hydratisierten Partikel (17) an einen weiteren Kühlabschnitt (22') in dem zweiten (12) Kreislauf, in der die hydratisierten Partikel (17) einen Teil ihrer Wärmeenergie abgeben;
- Trennen der in dem vorherigen Schritt gekühlten hydratisierten Partikel (17) von dem zweiten (14) Strom, wobei der weitere Kühlabschnitt (22') stromaufwärts von dem Kühlabschnitt (22) des zweiten (12) Kreislaufs angeordnet ist.

11. Verfahren nach einem der vorherigen Ansprüche, ferner umfassend die folgenden Schritte
- Speisen des Hydratisierungsabschnitts (23) mit
- den dekarbonisierten Partikeln (16),
- flüssigem Wasser (7) und/oder Wasserdampf (7), und
- optional dem Verdünnungsgas;
- Entnehmen eines Gases, umfassend heiße Luft, Wasserdampf, Brennstoff oder eine mit Sauerstoff angereicherte Zusammensetzung oder ein beliebiges Gemisch davon aus dem besagten Hydratisierungsabschnitt (23), das besagte Gas umfassend mindestens einen Teil der Wärme, die durch die Hydratisierung der dekarbonisierten Partikel (16) erzeugt wird;
- Zuführen des besagten Gases zu dem zweiten Kreislauf (12).

12. Verfahren nach einem der vorherigen Ansprüche, wobei der Schritt eines Überführens mindestens eines Teils der Wärme, die durch die Hydratisierung der dekarbonisierten Partikel (16) erzeugt wird, an das zweite Gas (14) ein Überführen mindestens eines Teils der Wärme, die durch die Hydratisierung der dekarbonisierten Partikel (16) erzeugt wird, an das zweite Gas (14) über mindestens einen Wärmetauscher umfasst.

13. Verfahren nach einem der vorherigen Ansprüche, ferner umfassend den Schritt eines Einführens der Partikel aus karbonisierten Materialien (6) in einen Heizabschnitt (32) des zweiten Kreislaufs (12), wobei der Heizabschnitt (32) stromabwärts von dem Hydratisierungsabschnitt (23) positioniert ist, sodass die Wärme, die dem Hydratisierungsabschnitt (23), den dekarbonisierten Partikeln (16) und optional den hydratisierten Partikeln (17), insbesondere dem zweiten Gas (14), entzogen wird, zum Erwärmen der Partikel aus karbonisierten Materialien (6) mittels eines Feststoff/Gas-Wärmeaustauschs (34) verwendet wird, wobei die erhitzten karbonisierten Partikel (6) anschließend von dem zweiten Gasstrom (14) getrennt und in den Reaktor (8) oder stromaufwärts von einem Vorheizabschnitts (42) des ersten Kreislaufs (2) überführt werden, vorzugsweise über eine zweite selektive Trenneinrichtung (21), die zwischen dem ersten (2) und dem zweiten (12) Kreislauf angeordnet ist und den Durchgang von Feststoffen zulässt, während sie den Durchgang der Gase (4, 14) im Wesentlichen verhindert.

14. Verfahren nach Anspruch 2 in Kombination mit einem der Ansprüche 3 bis 13, ferner umfassend den Schritt des Einführens der Partikel aus karbonisierten Materialien (6) in einen Heizabschnitt (32') des dritten Kreislaufs (12'), wobei der Heizabschnitt (32') stromabwärts von dem Kühlabschnitt (22") positioniert ist, sodass die Wärme, die den dekarbonisierten Partikel (16) und optional den hydratisierten Partikel (17) entzogen wird, und/oder die Wärme, die dem Hydratisierungsabschnitt (23), insbesondere dem dritten Gas (14'), entzogen wird, zum Erwärmen der Partikel aus karbonisierten Materialien (6) mittels eines Feststoff/Gas-Wärmeaustauschs (34') verwendet wird, wobei die erhitzten karbonisierten Partikel (6) anschließend von dem Strom des dritten Gases (14') getrennt und in den Reaktor (8) oder stromaufwärts von dem Vorheizabschnitt (42) des ersten Kreislaufs (2) überführt werden, vorzugsweise über eine zweite selektive Trenneinrichtung (21'), die zwischen dem ersten (2) und dritten (12') Kreislauf angeordnet ist und den Durchgang von Feststoffen zulässt, während sie den Durchgang der Gase (4, 14') im Wesentlichen verhindert.

15. Verfahren nach einem der vorherigen Ansprüche, ferner umfassend den Schritt eines Speisens des zweiten Kreislaufs (12) und/oder des dritten Kreislaufs (12') mit Luft und/oder einer mit Sauerstoff angereicherten Zusammensetzung, insbesondere reinem Sauerstoff, und optional Brennstoff.

16. Verfahren nach einem der vorherigen Ansprüche, ferner umfassend mindestens einen der folgenden Schritte
- Ablassen des dritten Gases (14') in die Atmosphäre an einem Auslass des dritten Kreislaufs (12'),
- Zuführen des dritten Gases (14') und optional Rauchgases (14"), das in einem extern befeuerten Kalzinator (84) des Reaktors (8) erzeugt wird, zu dem Reaktor (8); und/oder
- Zuführen des dritten Gases (14') zu mindestens einem Wärmerückgewinnungselement, in dem die Wärme des dritten Gases (14') zu Folgendem verwendet wird:
- Vorheizen und Trocknen von zumindest karbonisiertem Material und/oder Brennstoff;
- Trocknen von Kalkhydrat;
- Bereitstellen einer Wärmequelle für ein Gasbehandlungsverfahren, insbesondere für eine Amin-Gasbehandlungsanlage, eine Thermo-Swing-Adsorptionsanlage, eine kryogene Kühlanlage, eine CO2-Umwandlungsreaktion;
- Erzeugen mechanischer Arbeit; und/oder
- Erzeugen von Strom;

17. Verfahren nach einem der vorherigen Ansprüche, ferner umfassend ein Halten des Drucks in mindestens dem Hydratisierungsabschnitt (23), dem Kühlabschnitt (22) und/oder dem weiteren Kühlabschnitt (22') des zweiten Kreislaufs (12) oberhalb des Atmosphärendrucks zwischen 1 und 20 bar über Atmosphärendruck, und/oder der Temperatur in zumindest dem Hydratisierungsabschnitt (23), dem Kühlabschnitt (22) und/oder dem weiteren Kühlabschnitt (22') des zweiten Kreislaufs (12) unter der Temperatur, bei der eine Dehydratisierung auftritt, wie beispielsweise T[°K] < 11607 / (14,6484 - In(PH20[bar])).

18. Vorrichtung zur Dekarbonisierung von Kalkstein, Dolomit oder anderen karbonisierten Materialien und Hydratisierung des dekarbonisierten Kalksteins, Dolomits oder anderen karbonisierten Materials zum Durchführen des Verfahrens nach einem der vorherigen Ansprüche 1 bis 17, umfassend:
- einen ersten Kreislauf (2), in dem ein erstes Mitnahmegas (4), das im Wesentlichen frei von Stickstoff ist, Partikel (6) des besagten karbonisierten Minerals befördert, der besagte erste Kreislauf umfassend einen Reaktor (8), in dem die besagten Partikel (6) auf einen Temperaturbereich erhitzt werden, in dem Kohlendioxid abgegeben wird, um dekarbonisierte Partikel, umfassend CaO und/oder MgO, zu erlangen;
- einen zweiten Kreislauf (12), in dem ein zweites, im Wesentlichen kohlendioxidfreies Gas (14) zirkuliert wird, der zweite Kreislauf (12) umfassend einen Hydratisierungsabschnitt (23), in dem die aus dem ersten Kreislauf (2) überführten dekarbonisierten Partikel (16) mit Wasser (7) in flüssiger Form und/oder Dampf und optional einem Verdünnungsgas in Kontakt sind; wobei der zweite Kreislauf (12) mindestens eines von Folgenden umfasst: ein freies Auslassende zum Ablassen des zweiten Gases (12) in die Atmosphäre, ein Auslassende, das mit dem Reaktor (8) verbunden ist, um dem Reaktor (8) das zweite Gas (12) zuzuführen, und/oder ein Auslassende, das mit mindestens einem Wärmerückgewinnungselement, das die Wärme des zweiten Gases (12) zurückgewinnt, verbunden ist, wobei besagtes Element vorzugsweise aus ausgewählt ist aus der Gruppe, umfassend: einen Brennstofftrockner, einen Hydrattrockner, einen Dampferzeuger zum Erzeugen mechanischer Arbeit und/oder Strom in einer Turbine, und ein CO2-Behandlungsverfahren, wie beispielsweise eine Amin-Gasbehandlungsanlage, eine Thermo-Swing-Adsorptionsanlage, eine kryogene Kühlanlage.

19. Vorrichtung nach Anspruch 18, wobei der zweite Kreislauf (12) einen stromabwärts von dem Hydratisierungsabschnitt (23) des zweiten Kreislaufs (2) positionierten Kühlabschnitt (22) und optional einen weiteren Kühlabschnitt stromaufwärts von dem Hydratisierungsabschnitt (23) umfasst, der Kühlabschnitt (22) und optional der weitere Kühlabschnitt vorzugsweise umfassend jeweils einen Feststoff/Gas-Suspensionswärmetauscher (24, 24').

20. Vorrichtung nach Anspruch 18 oder 19, wobei eine erste selektive Trenneinrichtung (20), insbesondere ein Siphonelement, eine Schleifenabdichtung, eine einzelne oder mehrere Klappen, eine Tischzuführung, eine Zellenradschleuse, ein Fluidverschlusstopf, eine "Dollar"-Scheibe oder eines der folgenden Ventile: Drehventile, Kegelventile, J-Ventile, L-Ventile, Rieselventile und Prallplattenventile (20), die den ersten (2) und den zweiten Kreislauf (12) verbindet, ein Überführen der dekarbonisierten Partikel (16) von dem ersten Kreislauf (2) zu dem zweiten Kreislauf (12) zulässt, während der Durchgang von Gasen (4, 14) im Wesentlichen verhindert wird, vorzugsweise wobei die erste selektive Trenneinrichtung (20) stromaufwärts von einem Einlass (24.1) des Suspensionswärmetauschers (24) des Kühlabschnitts (22) des zweiten Kreislaufs (12) verbunden ist.

21. Vorrichtung nach einem der Ansprüche 18 bis 20, wobei der Hydratisierungsabschnitt (23) einen Wirbelschichtreaktor (25), wie beispielsweise eine zirkulierende Wirbelschicht, ein Flugstrombett oder eine Sprudelbettschicht, oder einen Löscher, wie beispielsweise einen Paddelmischer (25'), umfasst.

22. Vorrichtung nach einem der Ansprüche 18 bis 21, ferner umfassend einen dritten Kreislauf (12'), in dem das dritte Gas (14') zirkuliert, das im Wesentlichen frei von Kohlendioxid ist, der besagte dritte Kreislauf umfassend einen Kühlabschnitt (22"), in dem die aus dem ersten (2) oder zweiten Kreislauf (12) überführten dekarbonisierten Partikel (16) einen Teil ihrer Wärmeenergie an das dritte Gas (14') abgeben, vorzugsweise umfasst der besagte Kühlabschnitt (22") einen Feststoff/Gas-Suspensionswärmetauscher (24").

23. Vorrichtung nach dem vorherigen Anspruch, ferner umfassend eine erste selektive Trenneinrichtung (20'), die den zweiten (12) und den dritten Kreislauf (12') verbindet, was ein Überführen der dekarbonisierten Partikel (16) zwischen dem zweiten Kreislauf (12) und dem dritten Kreislauf (12') zulässt, während der Durchgang von Gasen (14, 14) im Wesentlichen verhindert wird, wobei die erste selektive Trenneinrichtung (20') vorzugsweise mit einem Rücklaufkanal (24.3) zum Sammeln der abgetrennten dekarbonisierten Partikel (16) des Suspensionswärmetauschers (24) des Kühlabschnitts (22) des zweiten (12) Kreislaufs und stromaufwärts von einem Einlass (24.1") des Suspensionswärmetauschers (24", 24) des Kühlabschnitts (22") des dritten Kreislaufs (12') und/oder eine erste selektive Trenneinrichtung (20), das den ersten (2) und den dritten Kreislauf (12") verbindet, was ein Überführen der dekarbonisierten Partikel (16) zwischen dem ersten Kreislauf (2) und dem dritten Kreislauf (12') zulässt, wobei der Durchgang von Gasen (4, 14') im Wesentlichen verhindert wird, verbunden ist, vorzugsweise wobei die erste selektive Trenneinrichtung (20) stromaufwärts von einem Einlass des Suspensionswärmetauschers (24) des Kühlabschnitts (22") des dritten Kreislaufs (12') verbunden ist.

24. Vorrichtung nach dem vorherigen Anspruch, wobei der dritte Kreislauf (12') einen weiteren Kühlabschnitt (22‴) umfasst, der stromaufwärts von dem Kühlabschnitt (22") des dritten Kreislaufs (12') positioniert ist, vorzugsweise wobei der besagte weitere Kühlabschnitt (22"') einen Feststoff/Gas-Suspensionswärmetauscher (24"') umfasst.

25. Vorrichtung nach Anspruch 23 oder 24, wobei eine zweite selektive Trenneinrichtung (20"), die den dritten (12') und den zweiten Kreislauf (12) verbindet, ein Überführen der dekarbonisierten Partikel (16) zwischen dem dritten Kreislauf (12') und dem zweiten Kreislauf (12) zulässt, während der Durchgang von Gasen (14, 14') im Wesentlichen verhindert wird, wobei die zweite selektive Trenneinrichtung (20") vorzugsweise mit einem Rücklaufkanal (24.3"; 24.3) zum Sammeln der abgetrennten dekarbonisierten Partikel (16) des Suspensionswärmetauschers (24"; 24) des Kühlabschnitts des dritten (14') Kreislaufs und mit einem Einlass des Hydrationsabschnitts (23) verbunden ist.

26. Vorrichtung nach dem vorherigen Anspruch, wobei eine dritte selektive Trenneinrichtung (20"'), die den zweiten (12) und den dritten Kreislauf (12') verbindet, ein Überführen der hydratisierten Partikel (17) von dem zweiten Kreislauf (12) zu dem dritten Kreislauf (12') zulässt, während der Durchgang von Gasen (14, 14') im Wesentlichen verhindert wird, vorzugsweise wobei die dritte selektive Trenneinrichtung (20‴) mit einem Auslass des Hydratisierungsabschnitts (23) und stromaufwärts von einem Einlass (24.1‴) des Suspensionswärmetauschers (24‴) des weiteren Kühlabschnitts (22"') des dritten Kreislaufs (14') verbunden ist.

27. Vorrichtung nach einem der Ansprüche 18 bis 26, wobei der erste Kreislauf (2) einen Vorheizabschnitt (42) umfasst, der besagte Vorheizabschnitt umfassend einen Feststoff/Gas-Suspensionswärmetauscher (44).

28. Vorrichtung nach einem der Ansprüche 18 bis 27, wobei der zweite Kreislauf (12) einen Heizabschnitt (32), der stromabwärts von dem Kühlabschnitt (22) des zweiten Kreislaufs (12) positioniert ist, aufweist, vorzugsweise wobei der besagte Heizabschnitt (32) einen Feststoff/Gas-Suspensionswärmetauscher (34) umfasst.

29. Vorrichtung nach dem vorherigen Anspruch, wobei eine zweite selektive Trenneinrichtung (21), die den ersten (2) und den zweiten Kreislauf (12) verbindet, ein Überführen der karbonisierten Partikel (6) vom zweiten Kreislauf (12) zum ersten Kreislauf (2) zulässt, während der Durchgang von Gasen (4, 14) im Wesentlichen verhindert wird, vorzugsweise wobei die zweite selektive Trenneinrichtung (21) mit einem Rücklaufkanal (34.3) zum Sammeln der abgetrennten karbonisierten Partikel (6) des Feststoff/Gassuspensions-Wärmetauschers (34) des Heizabschnitts (32) des zweiten Kreislaufs (12) und mit dem Reaktor (8) oder stromaufwärts von dem Feststoff/Gassuspensions-Wärmetauscher (44) des Vorheizabschnitts (32) des ersten Kreislaufs (2) verbunden ist, noch bevorzugter wobei die zweite selektive Trenneinrichtung (21), die den ersten (2) und den zweiten (12) Kreislauf verbindet, angeordnet ist, um ein Überführen der karbonisierten Partikel (6) zwischen dem zweiten und dem ersten Kreislauf zuzulassen, während es den Durchgang von Gasen (4, 14) im Wesentlichen verhindert, insbesondere ein Siphonelement, eine Schleifenabdichtung, eine einzelne oder mehrere Klappen, eine Tischzuführung, eine Zellenradschleuse, ein Fluidverschlusstopf, eine "Dollar"-Scheibe oder eines der folgenden Ventile: Drehventile, Kegelventil, J-Ventil, L-Ventil, Rieselventil und Prallplattenventil.

30. Vorrichtung nach einem der Ansprüche 22 bis 26, insbesondere in Kombination mit einem der Ansprüche 27 bis 29, wobei der dritte Kreislauf (12') einen Heizabschnitt (32') umfasst, der stromabwärts von dem Kühlabschnitt (22") des dritten Kreislaufs (12') positioniert ist, vorzugsweise wobei der besagte Heizabschnitt (32') einen Feststoff/Gas-Suspensionswärmetauscher (34') umfasst.

31. Vorrichtung nach dem vorherigen Anspruch, wobei eine zweite selektive Trenneinrichtung (21'), die den ersten (2) und den dritten Kreislauf (12') verbindet, ein Überführen der karbonisierten Partikel (6) vom dritten Kreislauf (12') zum ersten Kreislauf (2) zulässt, während der Durchgang von Gasen (4, 14') im Wesentlichen verhindert wird, vorzugsweise wobei die zweite selektive Trenneinrichtung (21') mit einem Rücklaufkanal (34.3') zum Sammeln der abgetrennten karbonisierten Partikel (6) des Feststoff-/Gassuspensionswärmetauschers (34') des dritten Kreislaufs (12') und mit dem Reaktor (8) oder stromaufwärts von dem Feststoff-/Gassuspensionswärmetauscher (44) des Vorheizabschnitts (32) des ersten Kreislaufs (2) verbunden ist, noch bevorzugter wobei die zweite selektive Trenneinrichtung (21'), die den ersten (2) und den dritten (12') Kreislauf verbindet, angeordnet ist, um ein Überführen der karbonisierten Partikel (6) zwischen dem dritten Kreislauf (12') und dem ersten Kreislauf (2) zuzulassen, während es den Durchgang der Gase (4, 14') im Wesentlichen verhindert, insbesondere ein Siphonelement, eine Schleifenabdichtung, eine einzelne oder mehrere Klappen, eine Tischzuführung, eine Zellenradschleuse, ein Fluidverschlusstopf, eine "Dollar"-Scheibe oder eines der folgenden Ventile: Drehventile, Kegelventil, J-Ventil, **L-**Ventil, Rieselventil und Prallplattenventil.

32. Vorrichtung nach einem der Ansprüche 18 bis 31, wobei der Reaktor (8) einen extern befeuerten Kalzinator (84) umfasst, wobei der besagte extern befeuerte Kalzinator (84) einen Abluftkanal (100) umfasst, wobei der Kanal (100) mit dem zweiten Kreislauf (12) verbunden ist, vorzugsweise stromaufwärts von dem Heizabschnitt (32).

33. Vorrichtung nach einem der Ansprüche 18 bis 32, wobei der Feststoff/Gas-Suspensionswärmetauscher (44) des ersten Kreislaufs (2) mindestens einen Trägheitsabscheider, insbesondere einen Zyklon, umfasst.

34. Vorrichtung nach einem der Ansprüche 18 bis 33, wobei der/die Feststoff- /Gassuspensionswärmetauscher (24, 24', 24", 24"', 24ʺʺ) des mindestens einen von dem zweiten (12) und/oder dritten (12') Kreislauf und/oder der Feststoff- /Gassuspensionswärmetauscher (34; 34') des Heizabschnitts (32, 32') des mindestens einen von dem zweiten (12) und dritten (12') Kreislauf jeweils mindestens einen Trägheitsabscheider, vorzugsweise einen Zyklon, umfassen.

35. Vorrichtung nach einem der Ansprüche 18 bis 34, umfassend einen Kondensator (50) zum Abscheiden mindestens eines Bestandteils, insbesondere Wasser, aus dem ersten Gas (4), wobei der besagte Kondensator (50) in dem ersten Kreislauf (2) stromabwärts von dem Reaktor (8) angeordnet ist.

36. Vorrichtung nach einem der Ansprüche 18 bis 35, wobei der erste Kreislauf (2) einen Rückführungskanal (90) zum Rückführen mindestens eines Teils des ersten Gases (4) von einer Position stromabwärts von dem Vorheizabschnitt (32) oder dem Kondensator (50) zu einer Position stromaufwärts von dem Reaktor (8) umfasst.

37. Vorrichtung nach einem der Ansprüche 18 bis 36, wobei der zweite Kreislauf (12) und/oder der dritte Kreislauf ein Wärmerückgewinnungselement (60) umfassen, vorzugsweise wobei das besagte Wärmerückgewinnungselement konfiguriert ist, um die in dem zweiten (14) und/oder dritten (14') Gas gespeicherte Wärme an einem Abschnitt des ersten Kreislaufs (2) an das erste Gas (4) abzugeben, noch bevorzugter wobei das besagte Wärmerückgewinnungssystem (60) ein Wärmetauscher (60) ist, der zwischen dem ersten (2) und dem zweiten (12) und/oder dritten (12') Kreislauf positioniert ist.

38. Vorrichtung nach einem der Ansprüche 18 bis 37, wobei der Reaktor (8) mindestens eines der folgenden Elemente umfasst: elektrische Heizung, Sauerstoffbrenner, einen indirekten Kalzinator, wie beispielsweise einen Reaktor mit festen Wärmeträgern, einen extern befeuerten Kalzinator (84) oder einen elektrisch beheizten Kalzinator oder eine Kombination davon.

39. Vorrichtung nach einem der Ansprüche 18 bis 38, wobei der Reaktor (8) einen Wirbelschichtreaktor, einen Flugstrombettreaktor, eine zirkulierende Wirbelschicht oder eine beliebige Kombination davon umfasst.

40. Vorrichtung nach dem vorherigen Anspruch, wobei der extern befeuerte Kalzinator (84) einen Einlasskanal (110) umfasst, wobei der besagte Kanal (110) mit dem zweiten Kreislauf (12) verbunden ist, vorzugsweise stromabwärts von dem Heizabschnitt (32).

41. Vorrichtung nach einem der Ansprüche 18 bis 39, wobei der dritte Kreislauf ein weiteres Wärmerückgewinnungselement umfasst, insbesondere in der Auflistung umfassend: einen Brennstofftrockner, einen Hydrattrockner, einen Dampferzeuger zum Erzeugen mechanischer Arbeit und/oder Strom in einer Turbine, ein CO2-Behandlungsverfahren, wie beispielsweise eine Amin-Gasbehandlungsanlage, eine Thermo-Swing-Adsorptionsanlage oder eine kryogene Kühlanlage.

## Revendications

1. Procédé de décarbonatation du calcaire, de la dolomie ou d'autres matériaux carbonatés et d'hydratation dudit calcaire décarbonaté, de ladite dolomie décarbonatée ou d'autres matériaux carbonatés décarbonatés, ledit procédé comprenant les étapes suivantes :
- chauffer des particules de matériaux carbonatés (6) dans un réacteur (8) d'un premier circuit (2) jusqu'à une plage de température dans laquelle le dioxyde de carbone des matériaux carbonatés est libéré afin d'obtenir des particules décarbonatées (16) comprenant du CaO et/ou du MgO ;
- convoyer lesdites particules de matériaux carbonatés (6) par un premier gaz d'entraînement (4) dans le premier circuit (2) pour préchauffer lesdits matériaux carbonatés (6), ledit gaz (4) comprenant le dioxyde de carbone libéré, la composition dudit gaz étant substantiellement exempte d'azote ;
- séparer, en particulier par inertie, les particules carbonatées (6) d'un flux du premier gaz d'entraînement (4) ;
- transférer les particules décarbonatées (16) vers un deuxième circuit (12), dans lequel circule un deuxième gaz (14), ledit circuit (12) comprenant une section d'hydratation (23) ;
- hydrater les particules décarbonatées (16) au contact de l'eau (7) sous forme liquide et/ou de vapeur, et optionnellement en présence d'un gaz de dilution, tel que l'air ou une composition enrichie en dioxygène, en particulier du dioxygène pur, dans la section d'hydratation (23) afin d'obtenir des particules hydratées (17) comprenant du Ca(OH)₂ et/ou du Mg(OH)₂ ;
- transférer au deuxième gaz (14) au moins une partie de la chaleur générée par l'hydratation des particules décarbonatées (16) ;
- au moins l'une des opérations suivantes :
i. rejeter le deuxième gaz (14) à l'atmosphère à une sortie du deuxième circuit (12),
ii. alimenter le réacteur (8) avec le deuxième gaz (14), et/ou
iii. alimenter avec le deuxième gaz (14) au moins un élément de récupération de chaleur dans lequel la chaleur du deuxième gaz (14) est utilisée pour :
- préchauffer et sécher au moins les matériaux carbonatés, en particulier les particules carbonatées (6) et/ou du combustible,
- sécher des produits hydratés, en particulier les particules hydratées (17),
- fournir une source de chaleur pour un procédé de traitement des gaz, en particulier un dispositif de traitement des gaz aminés, un dispositif d'adsorption à variation thermique, un dispositif de réfrigération cryogénique, une réaction de conversion du CO2,
- générer un travail mécanique et/ou
- générer de l'électricité.

2. Procédé selon la Revendication 1, dans lequel une partie de la chaleur générée par au moins l'hydratation des particules décarbonatées (16), la chaleur sensible des particules décarbonatées (16) et/ou la chaleur sensible des particules hydratées (17) est transférée à un troisième gaz (14') substantiellement exempt de dioxyde de carbone circulant dans un troisième circuit (12'), en particulier via un échangeur de chaleur et/ou via la mise en contact des particules hydratées (17) et/ou des particules décarbonatées (16) avec le troisième gaz (14').

3. Procédé selon la Revendication 1 ou 2, comprenant en outre le refroidissement des particules décarbonatées (16) avant l'étape d'hydratation dans une section de refroidissement (22, 22") du deuxième circuit (12) ou du troisième circuit (12'), dans laquelle les particules décarbonatées (16) cèdent une partie de leur énergie thermique, chauffant ainsi le deuxième gaz (14) ou le troisième gaz (14') et assurant un refroidissement desdites particules décarbonatées (16) ;

4. Procédé selon la revendication précédente, dans lequel l'étape de transfert des particules décarbonatées (16) vers un deuxième circuit (12) comprend le transfert des particules décarbonatées (16) vers la section de refroidissement (22) du deuxième circuit (12), de préférence via un premier moyen de séparation sélective (20) disposé entre le premier (2) et le deuxième circuit (12), ledit moyen de séparation (20) permettant le passage des solides tout en empêchant substantiellement le passage des gaz (4, 14), la section de refroidissement (22) du deuxième circuit (12) étant positionnée en aval de la section d'hydratation (23), comprenant en outre les étapes de :
- séparer par inertie les particules décarbonatées (16) convoyées par un flux du deuxième gaz (14) dans la section de refroidissement (22) du deuxième circuit (12) ;
- transférer les particules décarbonatées séparées (16) de ladite section de refroidissement (22) vers la section d'hydratation (23).

5. Procédé selon la Revendication 3, comprenant en outre les étapes de :
- transférer les particules décarbonatées (16) vers la section de refroidissement (22") du troisième circuit (12'), de préférence via un premier moyen de séparation sélective (20) disposé entre le premier (2) et le troisième circuit (12'), ledit moyen de séparation (20) permettant le passage des solides tout en empêchant substantiellement le passage des gaz (4, 14');
- séparer, en particulier par inertie, les particules décarbonatées (16) convoyées par un flux du troisième gaz (14') dans la section de refroidissement (22") du troisième circuit (12') ;
- transférer les particules décarbonatées (16) séparées de ladite section de refroidissement (22") vers la section d'hydratation (23), de préférence via un premier moyen de séparation sélective (20') disposé entre le deuxième (12) et le troisième circuits (12'), ledit moyen de séparation (20') permettant le passage des solides tout en empêchant substantiellement le passage des gaz (14, 14').

6. Procédé selon la Revendication 4 ou 5, dans lequel le transfert des particules décarbonatées *(16)* séparées de ladite section de refroidissement (22 ; 22") du deuxième *(12)* ou du troisième *(12')* circuit vers la section d'hydratation (23) comprend en outre les étapes de :
- transférer les particules décarbonatées *(16)* séparées de la section de refroidissement (22 ; 22") du deuxième *(12)* ou du troisième *(12')* circuit vers une section de refroidissement additionnelle (22* ; 22**) dans le deuxième *(12)* ou le troisième circuit *(12')* dans laquelle les particules décarbonatées *(16)* cèdent une partie de leur énergie thermique, respectivement ;
- séparer les particules décarbonatées *(16)* refroidies à l'étape précédente du flux du deuxième *(14)* ou du troisième gaz *(14')*, la section de refroidissement additionnelle (22* ; 22**) étant disposée en amont de la section de refroidissement (22' ; 22") du deuxième *(12)* ou du troisième circuit *(12'),* respectivement ;
- transférer les particules décarbonatées séparées *(16)* de ladite section de refroidissement additionnelle (22*, 22**) vers la section d'hydratation (23), en particulier via le premier moyen de séparation sélective (20') disposé entre le deuxième *(12)* et le troisième circuits *(12'),* ledit moyen de séparation (20') permettant le passage des solides tout en empêchant substantiellement le passage des gaz *(14, 14').*

7. Procédé selon la Revendication 4 ou 6 en combinaison avec la Revendication 4, dans lequel le transfert des particules décarbonatées *(16)* séparées de la section de refroidissement (22) ou de la section de refroidissement additionnelle (22*) du deuxième circuit *(12)* vers la section d'hydratation (23) comprenant les étapes de :
- transférer les particules décarbonatées *(16)* séparées de la section de refroidissement (22) ou de la section de refroidissement additionnelle (22*) du deuxième circuit *(12)* vers la section de refroidissement (22") du troisième circuit *(12')* comprenant le troisième gaz *(14')* dans laquelle les particules décarbonatées convoyées *(16)* cèdent une partie de leur énergie thermique, en particulier via un premier moyen de séparation sélective (20') disposé entre le deuxième *(12)* et le troisième circuits *(12'),* ledit moyen de séparation (20') permettant le passage des solides tout en empêchant substantiellement le passage des gaz (14, 14') ;
- séparer les particules décarbonatées (16) d'un flux du troisième gaz (14') ;
- transférer les particules décarbonatées (16) séparées du flux du troisième gaz (14') vers la section d'hydratation (23), en particulier via un deuxième moyen de séparation sélective (20") disposé entre le deuxième (12) et le troisième circuits (12'), ledit moyen de séparation (20") permettant le passage des solides tout en empêchant substantiellement le passage des gaz (14, 14').

8. Procédé selon la Revendication 5 ou 6 en combinaison avec la Revendication 5, dans lequel le transfert des particules décarbonatées (16) séparées de la section de refroidissement (22") ou de la section de refroidissement additionnelle (22**) du troisième circuit (12') vers la section d'hydratation (23) comprend les étapes de :
- transférer les particules décarbonatées (16) séparées de la section de refroidissement (22") ou de la section de refroidissement additionnelle (22**) du troisième circuit (12') vers la section de refroidissement (22) du deuxième circuit (12) comprenant le deuxième gaz (14) dans laquelle les particules décarbonatées convoyées (16) cèdent une partie de leur énergie thermique, en particulier via le premier moyen de séparation sélective (20') disposé entre le deuxième (12) et le troisième circuits (12'), ledit moyen de séparation (20") permettant le passage des solides tout en empêchant substantiellement le passage des gaz (14, 14') ;
- séparer les particules décarbonatées (16) d'un flux du deuxième gaz (14) ;
- transférer les particules décarbonatées (16) séparées du flux du deuxième gaz (14) vers la section d'hydratation (23).

9. Procédé selon la Revendication 5, la Revendication 6 en combinaison avec la Revendication 4, ou la Revendication 8 comprenant en outre les étapes de :
- transférer les particules hydratées (17) vers une section de refroidissement supplémentaire (22' ; 22") du troisième circuit (12') dans laquelle les particules hydratées (17) cèdent une partie de leur énergie thermique, de préférence via un troisième moyen de séparation sélective (20") disposé entre le deuxième (12) et le troisième circuits (12'), ledit moyen de séparation (20") permettant le passage des solides tout en empêchant substantiellement le passage des gaz (14, 14') ;
- séparer les particules hydratées (17) refroidies à l'étape précédente du flux du troisième gaz (14'), la section de refroidissement supplémentaire (22") étant disposée en amont de la section de refroidissement (22") du troisième circuit (12').

10. Procédé selon la Revendication 4, la Revendication 6 en combinaison avec la Revendication 5, ou la Revendication 8, comprenant en outre les étapes de :
- transférer les particules hydratées (17) vers une section de refroidissement supplémentaire (22') dans le deuxième circuit (12) dans laquelle les particules hydratées (17) cèdent une partie de leur énergie thermique ;
- séparer les particules hydratées (17) refroidies à l'étape précédente du flux du deuxième gaz (14), la section de refroidissement supplémentaire (22') étant disposée en amont de la section de refroidissement (22) du deuxième circuit (12).

11. Procédé selon l'une quelconque des revendications précédentes, comprenant en outre les étapes de
- alimenter la section d'hydratation (23) avec :
- les particules décarbonatées (16),
- de l'eau liquide (7) et/ou de la vapeur d'eau (7), et
- optionnellement le gaz de dilution ;
- extraire de ladite section d'hydratation (23) un gaz comprenant de l'air chaud, de la vapeur d'eau, du combustible, ou une composition enrichie en dioxygène, ou tout mélange de ceux-ci, ledit gaz comprenant au moins une partie de la chaleur générée par l'hydratation des particules décarbonatées (16) ;
- alimenter le deuxième circuit (12) avec ledit gaz.

12. Procédé selon l'une quelconque des revendications précédentes, dans lequel l'étape de transfert d'au moins une partie de la chaleur générée par l'hydratation des particules décarbonatées (16) au deuxième gaz (14) comprend le transfert d'au moins une partie de la chaleur générée par l'hydratation des particules décarbonatées (16) au deuxième gaz (14) via au moins un échangeur de chaleur.

13. Procédé selon l'une quelconque des revendications précédentes, comprenant en outre l'étape d'introduire les particules de matériaux carbonatés (6) dans une section de chauffage (32) du deuxième circuit (12), ladite section de chauffage (32) étant positionnée en aval de la section d'hydratation (23), de sorte que la chaleur extraite de la section d'hydratation (23), des particules décarbonatées (16), et optionnellement des particules hydratées (17), en particulier vers le deuxième gaz (14), soit utilisée pour chauffer les particules de matériaux carbonatés (6) au moyen d'un échange thermique solide-gaz (34), les particules carbonatées chauffées (6) étant ensuite séparées du flux du deuxième gaz (14) et transférées vers le réacteur (8) ou en amont d'une section de préchauffage (42) du premier circuit (2), de préférence via un deuxième moyen de séparation sélective (21) disposé entre le premier (2) circuit et le deuxième (12) circuit, permettant le passage des solides tout en empêchant substantiellement le passage des gaz (4, 14).

14. Procédé selon la Revendication 2 en combinaison avec l'une quelconque des Revendications 3 à 13, comprenant en outre l'étape d'introduire les particules de matériaux carbonatés (6) dans une section de chauffage (32') du troisième circuit (12'), ladite section de chauffage (32') étant positionnée en aval de la section de refroidissement (22"), de sorte que la chaleur extraite des particules décarbonatées (16) et optionnellement des particules hydratées (17) et/ou la chaleur extraite de la section d'hydratation (23), en particulier vers le troisième gaz (14'), soit utilisée pour chauffer les particules de matériaux carbonatés (6) au moyen d'un échange thermique solide-gaz (34'), les particules carbonatées chauffées (6) étant ensuite séparées du flux du troisième gaz (14') et transférées vers le réacteur (8) ou en amont de la section de préchauffage (42) du premier circuit (2) disposé entre le premier (2) circuit et le troisième (12') circuit, permettant le passage des solides tout en empêchant substantiellement le passage des gaz (4, 14').

15. Procédé selon l'une quelconque des revendications précédentes, comprenant en outre l'étape d'alimenter le deuxième circuit (12) et/ou le troisième circuit (12') avec de l'air et/ou une composition enrichie en dioxygène, en particulier du dioxygène pur, et optionnellement du combustible.

16. Procédé selon l'une quelconque des revendications précédentes, comprenant en outre au moins l'une des étapes de :
- rejeter le troisième gaz (14') dans l'atmosphère par une sortie du troisième circuit (12') ;
- alimenter le réacteur (8) avec le troisième gaz (14') et optionnellement des fumées (14") produites dans un calcinateur chauffé à l'extérieur (84) du réacteur (8) ; et/ou
- alimenter avec le troisième gaz (14') au moins un élément de récupération de chaleur dans lequel la chaleur du troisième gaz (14') est utilisée pour :
- préchauffer et sécher au moins un matériau carbonaté et/ou du combustible ;
- sécher un produit de chaux hydratée ;
- fournir une source de chaleur pour un procédé de traitement des gaz, en particulier un appareil de traitement de gaz aux amines, un dispositif d'adsorption à variation thermique, un dispositif de réfrigération cryogénique, une réaction de conversion du CO2 ;
- générer un travail mécanique ; et/ou
- générer de l'électricité ;

17. Procédé selon l'une quelconque des revendications précédentes, comprenant en outre le maintien de la pression au moins dans la section d'hydratation (23), la section de refroidissement (22) et/ou la section de refroidissement supplémentaire (22') du deuxième circuit (12) au-dessus de la pression atmosphérique entre 1 et 20 bars au-dessus de la pression atmosphérique, et/ou de la température au moins dans la section d'hydratation (23), la section de refroidissement (22) et/ou la section de refroidissement supplémentaire (22') du deuxième circuit (12) en dessous de la température à laquelle une déshydratation se produit, telle que T[°K] < 11607 / (14,6484 - In(PH20[bar])).

18. Dispositif pour la décarbonatation du calcaire, de la dolomie ou d'autres matériaux carbonatés et l'hydratation dudit calcaire décarbonaté, de ladite dolomie décarbonatée ou d'autres matériaux carbonatés, pour mettre en œuvre le procédé selon l'une quelconque des revendications précédentes 1 à 17, comprenant :
- un premier circuit (2) dans lequel un premier gaz d'entraînement (4) substantiellement exempt d'azote convoyant des particules (6) dudit minéral carbonaté, ledit premier circuit comprenant un réacteur (8) dans lequel lesdites particules (6) sont chauffées à une plage de température dans laquelle du dioxyde de carbone est libéré afin d'obtenir des particules décarbonatées comprenant du CaO et/ou du MgO ;
- un deuxième circuit (12) dans lequel un deuxième gaz (14) substantiellement exempt de dioxyde de carbone est mis en circulation, le deuxième circuit (12) comprenant une section d'hydratation (23) dans laquelle les particules décarbonatées (16) transférées du premier circuit (2) sont au contact d'eau (7) sous forme liquide et/ou de vapeur et optionnellement d'un gaz diluant, le deuxième circuit (12) comprenant au moins l'un des éléments suivants : une extrémité de sortie libre pour rejeter le deuxième gaz (12) à l'atmosphère, une extrémité de sortie reliée au réacteur (8) pour alimenter le réacteur (8) avec le deuxième gaz (12) et/ou une extrémité de sortie reliée à au moins un élément de récupération de chaleur récupérant la chaleur du deuxième gaz (12), de préférence ledit élément étant sélectionné dans le groupe comprenant : un sécheur de combustible, un sécheur d'hydrate, un générateur de vapeur pour générer un travail mécanique et/ou de l'électricité dans une turbine et un procédé de traitement du CO2 tel qu'un appareil de traitement de gaz aux amines, un dispositif d'adsorption à variation thermique ou un dispositif de réfrigération cryogénique.

19. Dispositif selon la revendication 18, dans lequel le deuxième circuit (12) comprend une section de refroidissement (22) positionnée en aval de la section d'hydratation (23) du deuxième circuit (2) et optionnellement une section de refroidissement supplémentaire en amont de la section d'hydratation (23), de préférence la section de refroidissement (22) et optionnellement la section de refroidissement supplémentaire comprenant respectivement un échangeur de chaleur à suspension solide/gaz (24, 24').

20. Dispositif selon la revendication 18 ou 19, dans lequel un premier moyen de séparation sélective, en particulier un élément siphon, un joint boucle, un ou plusieurs clapets, un doseur à table, un sas rotatif à roue cellulaire, un pot d'étanchéité fluide, une plaque « Dollar », ou l'une quelconque des vannes suivantes : vannes rotatives, vanne conique, vanne en J, vanne en **L,** vanne à écoulement contrôlé et vanne à clapet battant (20) reliant le premier (2) et le deuxième circuit (12) permet le transfert des particules décarbonatées (16) du premier circuit (2) vers le deuxième circuit (12) tout en empêchant substantiellement le passage des gaz (4, 14), de préférence le premier moyen de séparation sélective (20) étant raccordé en amont d'une entrée (24.1) de l'échangeur de chaleur à suspension (24) de la section de refroidissement (22) du deuxième circuit (12).

21. Dispositif selon l'une quelconque des Revendications 18 à 20, dans lequel la section d'hydratation (23) comprend un réacteur à lit fluidisé (25) tel qu'un lit fluidisé circulant, un lit entraîné ou un lit bouillonnant ou un hydrateur tel qu'un mélangeur à pales (25).

22. Dispositif selon l'une quelconque des revendications 18 à 21, comprenant en outre un troisième circuit (12) dans lequel le troisième gaz (14) substantiellement exempt de dioxyde de carbone est mis en circulation, ledit troisième circuit comprenant une section de refroidissement (22") dans laquelle les particules décarbonatées (16) transférées du premier (2) ou du deuxième (12) circuit cèdent une partie de leur énergie thermique au troisième gaz *(14'),* de préférence ladite section de refroidissement (22") comprenant un échangeur de chaleur à suspension solide/gaz (24").

23. Dispositif selon la revendication précédente, comprenant en outre un premier moyen de séparation sélective (20') reliant le deuxième *(12)* et le troisième circuit *(12')* permettant le transfert des particules décarbonatées *(16)* entre le deuxième circuit *(12)* et le troisième circuit *(12')* tout en empêchant substantiellement le passage des gaz *(14, 14'),* de préférence le premier moyen de séparation sélective (20') étant raccordé à un passage de retour (24.3) pour collecter les particules décarbonatées séparées *(16)* de l'échangeur de chaleur à suspension (24) de la section de refroidissement (22) du deuxième *(12)* circuit et en amont d'une entrée (24.1") de l'échangeur de chaleur à suspension (24", 24) de la section de refroidissement (22") du troisième (12') circuit, et/ou un premier moyen de séparation sélective (20) reliant le premier (2) et le troisième circuit (12") permettant le transfert des particules décarbonatées (16) entre le premier circuit (2) et le troisième circuit (12') tout en empêchant substantiellement le passage des gaz (4, *14'*), de préférence le premier moyen de séparation sélective (20) étant raccordé en amont d'une entrée de l'échangeur de chaleur à suspension (24) de la section de refroidissement (22") du troisième circuit (12').

24. Dispositif selon la revendication précédente, dans lequel le troisième circuit (12') comprend une section de refroidissement supplémentaire (22") positionnée en amont de la section de refroidissement (22") du troisième circuit (12'), de préférence ladite section de refroidissement supplémentaire (22") comprenant un échangeur de chaleur à suspension solide/gaz (24").

25. Dispositif selon la Revendication 23 ou 24, dans lequel un deuxième moyen de séparation sélective (20") reliant le troisième (12') et le deuxième circuit (12) permet le transfert des particules décarbonatées (16) entre le troisième circuit (12') et le deuxième circuit (12) tout en empêchant substantiellement le passage des gaz (14, 14'), de préférence le deuxième moyen de séparation sélective (20") étant raccordé à un passage de retour (24.3" ; 24.3) pour collecter les particules décarbonatées séparées (16) de l'échangeur de chaleur à suspension (24" ; 24) de la section de refroidissement du troisième circuit (14') et à une entrée de la section d'hydratation (23).

26. Dispositif selon la revendication précédente, dans lequel un troisième moyen de séparation sélective (20") reliant le deuxième (12) et le troisième circuit (12') permet le transfert des particules hydratées (17) du deuxième circuit (12) vers le troisième circuit (12') tout en empêchant substantiellement le passage des gaz (14, 14'), de préférence le troisième moyen de séparation sélective (20") étant raccordé à une sortie de la section d'hydratation (23) et en amont d'une entrée (24.1") de l'échangeur de chaleur à suspension (24") de la section de refroidissement supplémentaire (22") du troisième circuit (14').

27. Dispositif selon l'une quelconque des Revendications 18 à 26, dans lequel le premier circuit (2) comprend une section de préchauffage (42), ladite section de préchauffage comprenant un échangeur de chaleur à suspension solide/gaz (44).

28. Dispositif selon l'une quelconque des Revendications 18 à 27, dans lequel le deuxième circuit (12) comprend une section de chauffage (32) positionnée en aval de la section de refroidissement (22) du deuxième circuit (12), de préférence ladite section de chauffage (32) comprenant un échangeur de chaleur à suspension solide/gaz (34).

29. Dispositif selon la revendication précédente, dans lequel un deuxième moyen de séparation sélective (21) reliant le premier (2) et le deuxième circuit (12) permet le transfert des particules carbonatées (6) du deuxième circuit (12) vers le premier circuit (2) tout en empêchant substantiellement le passage des gaz (4, 14), de préférence le deuxième moyen de séparation sélective (21) étant raccordé à un passage de retour (34.3) pour collecter les particules carbonatées séparées (6) de l'échangeur de chaleur à suspension solide/gaz (34) de la section de chauffage (32) du deuxième circuit (12) et au réacteur (8) ou en amont de l'échangeur de chaleur à suspension solide/gaz (44) de la section de préchauffage (32) du premier circuit (2), plus préférablement le deuxième moyen de séparation sélective (21) reliant le premier (2) et le deuxième (12) circuit étant agencé de manière à permettre le transfert des particules carbonatées (6) entre le deuxième circuit et le premier circuit tout en empêchant substantiellement le passage des gaz (4, 14), en particulier un élément siphon, un joint boucle, un ou plusieurs clapets, un doseur à table, un sas rotatif à roue cellulaire, un pot d'étanchéité fluide, une plaque « Dollar », ou l'une quelconque des vannes suivantes : vannes rotatives, vanne conique, vanne en J, vanne en L, vanne à écoulement contrôlé et vanne à clapet battant.

30. Dispositif selon l'une quelconque des Revendications 22 à 26, en particulier en combinaison avec l'une quelconque des Revendications 27 à 29, dans lequel le troisième circuit (12) comprend une section de chauffage (32) positionnée en aval de la section de refroidissement (22") du troisième circuit (12'), de préférence ladite section de chauffage (32') comprenant un échangeur de chaleur à suspension solide/gaz (34').

31. Dispositif selon la revendication précédente, dans lequel un deuxième moyen de séparation sélective (21) reliant le premier (2) et le troisième circuit (12) permet le transfert des particules carbonatées (6) du troisième circuit (12) vers le premier circuit (2) tout en empêchant substantiellement le passage des gaz (4, 14'), de préférence le deuxième moyen de séparation sélective (21) étant raccordé à un passage de retour (34.3') pour collecter les particules carbonatées séparées (6) de l'échangeur de chaleur à suspension solide/gaz (34') du troisième circuit (12) et au réacteur (8) ou en amont de l'échangeur de chaleur à suspension solide/gaz (44) de la section de préchauffage (32) du premier circuit (2), plus préférablement le deuxième moyen de séparation sélective (21) reliant le premier (2) et le troisième (12) circuit étant agencé de manière à permettre le transfert des particules carbonatées (6) entre le troisième circuit (12) et le premier circuit (2) tout en empêchant substantiellement le passage des gaz (4, 14'), en particulier un élément siphon, un joint boucle, un ou plusieurs clapets, un doseur à table, un sas rotatif à roue cellulaire, un pot d'étanchéité fluide, une plaque « Dollar », ou l'une quelconque des vannes suivantes : vannes rotatives, vanne conique, vanne en J, vanne en L, vanne à écoulement contrôlé et vanne à clapet battant.

32. Dispositif selon l'une quelconque des Revendications 18 à 31, dans lequel le réacteur (8) comprend un calcinateur chauffé extérieurement (84), ledit calcinateur chauffé extérieurement (84) comprenant un passage d'échappement (100), ledit passage (100) étant connecté au deuxième circuit (12), de préférence en amont de la section de chauffage (32).

33. Dispositif selon l'une quelconque des Revendications 18 à 32, dans lequel l'échangeur de chaleur à suspension solide/gaz (44) du premier circuit (2) comprend au moins un séparateur inertiel, en particulier un cyclone.

34. Dispositif selon l'une quelconque des Revendications 18 à 33, dans lequel le(s) échangeur(s) de chaleur à suspension solide/gaz (24, 24', 24", 24", 24") d'au moins un parmi le deuxième (12) et/ou le troisième (12) circuit et/ou l'échangeur de chaleur à suspension solide/gaz (34 ; 34) de la section de chauffage (32, 32) d'au moins un parmi le deuxième (12) et le troisième (12) circuit comprennent chacun au moins un séparateur inertiel, de préférence un cyclone.

35. Dispositif selon l'une quelconque des Revendications 18 à 34, comprenant un condenseur (50) pour séparer au moins un constituant, en particulier l'eau, du premier gaz (4), ledit condenseur (50) étant positionné dans le premier circuit (2) en aval du réacteur (8).

36. Dispositif selon l'une quelconque des Revendications 18 à 35, dans lequel le premier circuit (2) comprend un passage de recyclage (90) pour recycler au moins une partie du premier gaz (4) d' une position en aval de la section de préchauffage (32) ou du condenseur (50) vers une position en amont du réacteur (8).

37. Dispositif selon l'une quelconque des Revendications 18 à 36, dans lequel le deuxième circuit (12) et/ou le troisième circuit comprend un élément de récupération de chaleur (60), de préférence ledit élément de récupération de chaleur étant configuré pour échanger la chaleur accumulée dans le deuxième (14) et/ou le troisième (14) gaz vers le premier gaz (4) à une section du premier circuit (2), plus préférablement ledit système de récupération de chaleur (60) étant un échangeur de chaleur (60) positionné entre le premier (2) circuit et le deuxième (12) et/ou le troisième (12) circuit.

38. Dispositif selon l'une quelconque des Revendications 18 à 37, dans lequel le réacteur (8) comprend au moins l'un des éléments suivants : chauffage électrique, oxy-brûleur, calcinateur indirect tel qu'un réacteur utilisant un solide caloporteur, un calcinateur chauffé extérieurement (84), ou un calcinateur chauffé électriquement, ou une combinaison de ceux-ci.

39. Dispositif selon l'une quelconque des Revendications 18 à 38, dans lequel le réacteur (8) comprend un réacteur à lit fluidisé, un réacteur à lit entraîné, un lit fluidisé circulant ou toute combinaison de ceux-ci.

40. Dispositif selon la revendication précédente, dans lequel le calcinateur chauffé extérieurement (84) comprend un passage d'admission (110), ledit passage (110) étant connecté au deuxième circuit (12), de préférence en aval de la section de chauffage (32).

41. Dispositif selon l'une quelconque des Revendications 18 à 39, dans lequel le troisième circuit comprend un élément de récupération de chaleur supplémentaire, en particulier dans la liste comprenant : un sécheur de combustible, un sécheur d'hydrate, un générateur de vapeur pour générer un travail mécanique et/ou de l'électricité dans une turbine, un procédé de traitement du CO2 tel qu'un appareil de traitement des gaz par amines, un dispositif d'adsorption à variation thermique ou un dispositif de réfrigération cryogénique.
